(19) Europäisches Patentamt / European Patent Office / Office européen des brevets

(11) **EP 4 788 023 A1**

(12) **EUROPEAN PATENT APPLICATION**
published in accordance with Art. 153(4) EPC

(43) Date of publication:
**05.08.2026  Bulletin 2026/32**

(21) Application number: 23953317.7

(22) Date of filing: **25.09.2023**

(51) International Patent Classification (IPC):
*H04W 72/25* (2023.01)

(52) Cooperative Patent Classification (CPC):
H04W 72/25

(86) International application number:
**PCT/CN2023/121112**

(87) International publication number:
**WO 2025/065152 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHANG, Shichang**
**Dongguan, Guangdong 523860 (CN)**

(74) Representative: **Mewburn Ellis LLP**
**Aurora Building**
**Counterslip**
**Bristol BS1 6BX (GB)**

(54) **SIDELINK COMMUNICATION METHOD, AND TERMINAL**

(57)  The present disclosure relates to a sidelink communication method and a terminal. The method includes the following. A first terminal transmits first control information, where the first control information includes sidelink positioning reference signal (SL PRS) transmission information and/or channel occupancy time (COT) sharing information. In the embodiments of the present disclosure, the first control information transmitted by the terminal includes the SL PRS information and the COT sharing information, which can reduce the complexity of transmitting and/or receiving sidelink control information by the terminal.

S910

900

FIRST TERMINAL TRANSMITS FIRST CONTROL INFORMATION, WHERE THE FIRST CONTROL INFORMATION INCLUDES SL PRS TRANSMISSION INFORMATION AND/OR COT SHARING INFORMATION

FIG. 9

EP 4 788 023 A1

**Description**

TECHNICAL FIELD

This disclosure relates to the field of communication, and more particularly, to a sidelink communication method and a terminal.

BACKGROUND

To improve positioning accuracy, the 3rd Generation Partnership Project (3GPP) conducts research on the feasibility and performance of positioning technologies based on sidelink positioning reference signal (SL PRS). In addition, a channel occupancy time (COT) sharing mechanism is supported in a sidelink over unlicensed spectrum (SL-U) system. A terminal can share the COT with other terminals after initiating the COT by listen before talk (LBT). Other terminals access a channel by using one of the Type2 LBT manners, which improves resource utilization and also facilitates channel competition among SL-U terminals.

SUMMARY

Embodiments of the present disclosure provide a sidelink communication method and a terminal, which can reduce the complexity of transmitting and receiving sidelink control information.
Embodiments of the present disclosure provide a sidelink communication method. The method includes the following. A first terminal transmits first control information, where the first control information includes sidelink positioning reference signal (SL PRS) transmission information and/or channel occupancy time (COT) sharing information.
Embodiments of the present disclosure provide a sidelink communication method. The method includes the following. A second terminal receives first control information, where the first control information includes SL PRS transmission information and/or COT sharing information.
Embodiments of the present disclosure provide a first terminal. The first terminal includes a transmitting unit configured to transmit first control information, where the first control information includes SL PRS transmission information and/or COT sharing information.
Embodiments of the present disclosure provide a second terminal. The second terminal includes a receiving unit configured to receive first control information, where the first control information includes SL PRS transmission information and/or COT sharing information.
Embodiments of the present disclosure provide a terminal device. The terminal device includes a transceiver, a processor, and a memory. The memory is configured to store a computer program. The transceiver is configured to communicate with other devices. The processor is configured to invoke and execute the computer program stored in the memory, to cause the terminal device to perform the foregoing sidelink communication method.
Embodiments of the present disclosure provide a chip for implementing the foregoing sidelink communication method. Specifically, the chip includes a processor configured to invoke and execute a computer program from a memory, to cause a device installed with the chip to perform the foregoing sidelink communication method.
Embodiments of the present disclosure provide a computer-readable storage medium configured to store a computer program which, when executed by a device, causes the device to perform the foregoing sidelink communication method.
Embodiments of the present disclosure provide a computer program product including computer program instructions which cause a computer to perform the foregoing sidelink communication method.
Embodiments of the present disclosure provide a computer program which, when executed by a computer, causes the computer to perform the foregoing sidelink communication method.
In the embodiments of the present disclosure, the first control information transmitted by a terminal includes SL PRS information and COT sharing information, which can reduce the complexity of transmitting and/or receiving sidelink control information by the terminal.

BRIEF DESCRIPTION OF THE DRAWINGS

FIG. 1 is a schematic diagram of slot symbols used for sidelink (SL) transmission according to the present disclosure.
FIG. 2 is a schematic diagram of a slot structure for physical sidelink control channel (PSCCH) and physical sidelink shared channel (PSSCH) according to the present disclosure.
FIG. 3 is a schematic diagram of time-domain positions of PSSCH demodulation reference symbol (DMRS) symbols according to the present disclosure.

FIG. 4 is a schematic diagram of frequency-domain positions of PSSCH DMRS symbols according to the present disclosure.

FIG. 5 is a schematic diagram of a resource pool of PSSCH and PSCCH according to the present disclosure.

FIG. 6 is a schematic diagram of a slot structure in a new radio (NR) system according to the present disclosure.

FIG. 7 is a schematic diagram of interlaced resource blocks according to the present disclosure.

FIG. 8 is a schematic diagram of reference block (RB) sets according to the present disclosure.

FIG. 9 is a schematic flowchart of a sidelink communication method according to an embodiment of the present disclosure.

FIG. 10 is a schematic flowchart of a sidelink communication method according to an embodiment of the present disclosure.

FIG. 11 is a schematic block diagram of a first terminal according to an embodiment of the present disclosure.

FIG. 12 is a schematic block diagram of a second terminal according to an embodiment of the present disclosure.

FIG. 13 is a schematic block diagram of a communication device according to embodiments of the present disclosure.

FIG. 14 is a schematic block diagram of a chip according to embodiments of the present disclosure.

FIG. 15 is a schematic block diagram of a communication system according to embodiments of the present disclosure.

DETAILED DESCRIPTION

The following will describe technical solutions of embodiments of the disclosure with reference to the accompanying drawings in embodiments of the disclosure.

The technical solutions in embodiments of the disclosure are applicable to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th generation (5G) system, or other communication systems.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

In an embodiment, a communication system in embodiments of the disclosure may be applied to a carrier aggregation (CA) scenario, a dual connectivity (DC) scenario, or a standalone (SA) network deployment scenario.

In an embodiment, the communication system in implementations of the disclosure is applicable to the unlicensed spectrum, and the unlicensed spectrum may be regarded as the shared spectrum. Or the communication system in embodiments of the disclosure is applicable to the licensed spectrum, and the licensed spectrum may be regarded as the non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device can be deployed on land, which includes indoor or outdoor, handheld, wearable, or in-vehicle. The terminal device can also be deployed on water (such as ships, etc.). The terminal device can also be deployed in the air (such as airplanes, balloons, satellites, etc.).

In embodiments of the disclosure, the terminal device can be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, and may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device provides services for a cell, and the terminal device communicates with the network device on a transmission resource (for example, a frequency-domain resource or a spectrum resource) for the cell. The cell may be a cell corresponding to the network device (for example, a base station). The cell may correspond to a macro base station, or may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It should be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the elaboration of embodiments of the disclosure, the term "correspondence" may mean that there is a direct or indirect correspondence between the two, may mean that there is an association between the two, or may mean a relationship of indicating and indicated or configuring and configured, etc.

In order for better understanding of technical solutions of embodiments of the disclosure, technologies related to the embodiments of the disclosure will be elaborated below. The following related art as optional schemes can be arbitrarily combined with the technical solutions of embodiments of the disclosure, which shall all belong to the protection scope of embodiments of the disclosure.

I. Slot structure in new radio sidelink (NR SL)

In new radio vehicle-to-everything (NR-V2X), a physical sidelink shared channel (PSSCH) and a physical sidelink control channel (PSCCH) associated with the PSSCH are transmitted in the same slot, where the PSCCH occupies 2 or 3 time-domain symbols. Time-domain resource assignment of the NR-V2X is performed with slot granularity. The starting point and the length of time-domain symbols used for sidelink transmission in a slot are configured through parameters starting symbol position *sl-StartSLsymbols* and the number of symbols *sl-LengthSLsymbols*. The last symbol in these symbols is used as a guard period (GP), and only the remaining time-domain symbols can be used for the PSSCH and the PSCCH. However, if a transmission resource for a physical sidelink feedback channel (PSFCH) is configured in a slot, the PSSCH and the PSCCH cannot occupy a time-domain symbol(s) for PSFCH transmission, as well as automatic gain control (AGC) and GP symbols preceding the symbol(s) for the PSFCH transmission.

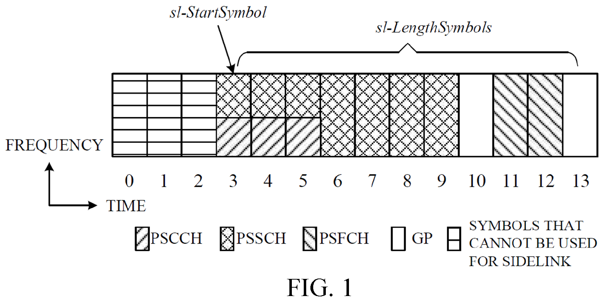

As illustrated in FIG. 1, a network configures *sl-StartSymbol*=3 and *sl-LengthSymbols*=11, that is, 11 time-domain symbols starting from symbol index 3 in one slot can be used for sidelink transmission. There are PSFCH transmission resources in the slot, and the PSFCH occupies symbols 11 and 12, where symbol 11 serves as an AGC symbol of the PSFCH, and symbols 10 and 13 are used as the GP. Time-domain symbols available for PSSCH transmission are symbols 3 to 9. PSCCH occupies 3 time-domain symbols, that is, symbols 3, 4, and 5. Symbol 3 usually serves as the AGC symbol.

In addition to PSCCH and PSSCH, a PSFCH may also exist in a sidelink slot of NR-V2X. In one slot, the first orthogonal frequency division multiplexing (OFDM) symbol is fixed for AGC. On the AGC symbol, a UE copies information transmitted on the second symbol. A symbol is reserved at the end of the slot for transmit-receive switching, which is used for the UE to switch from a transmit (or receive) state to a receive (or transmit) state. Among the remaining OFDM symbols, the PSCCH can occupy two or three OFDM symbols starting from the second sidelink symbol. In the frequency domain, the number of physical resource blocks (PRBs) occupied by the PSCCH is within one subband range of the PSSCH. If the number of PRBs occupied by the PSCCH is smaller than the size of one subchannel of the PSSCH, or the frequency-domain resource of the PSSCH includes multiple subchannels, the PSCCH and the PSSCH can be frequency division multiplexed on an OFDM symbol where the PSCCH is on.

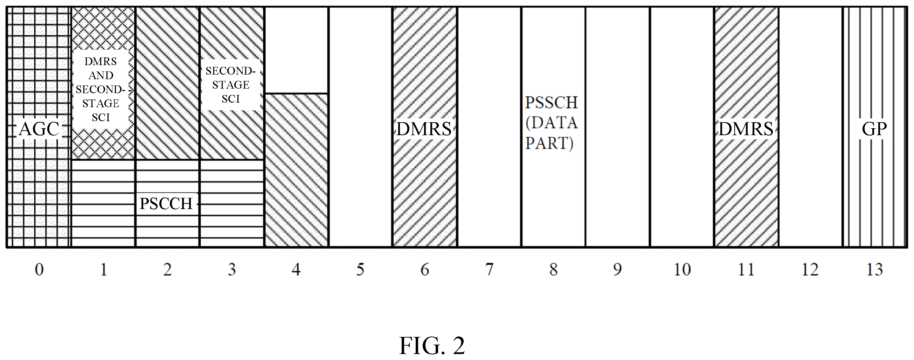

The PSSCH is used for carrying second-stage sidelink control information (SCI) and the sidelink-shared channel (SL-SCH). The 3rd generation partnership project (3GPP) defines two second-stage SCI formats, namely SCI format 2-A and SCI format 2-B. The SCI format 2-B is applicable to a multicast communication mode in which sidelink hybrid automatic repeat request (HARQ) feedback is based on distance information. The SCI format 2-A is applicable to other scenarios, such as unicast, multicast, and broadcast that do not require sidelink HARQ feedback, a unicast communication mode that requires sidelink HARQ feedback, and a multicast communication mode that requires acknowledgement (ACK) feedback or negative acknowledgement (NACK) feedback. 3GPP additionally introduces a second-stage SCI format, i.e., SCI format 2-C, which is used for indicating a reference resource set and trigger signaling under specific circumstances. Modulated symbols of the second-stage SCI is mapped in a manner of first frequency-domain and then time-domain, starting from a symbol where the first PSSCH modulation and demodulation reference signal is on, and are multiplexed with resource elements (REs) of the demodulation reference symbols (DMRSs) in an interlaced manner on the symbol. Moreover, the modulated symbols of the second-stage SCI cannot be mapped to REs where phase-tracking reference signals (PT-RS) are on, as illustrated in FIG. 2.

In a sidelink communication system, UEs independently select resources or determine transmission resources based on sidelink resource scheduling from the network, both of which may result in different UEs transmitting PSCCHs on the same time-frequency resource. To ensure that a receiver can detect at least one PSCCH in a case of PSCCH resource conflicts, LTE-V2X adopts a PSCCH DMRS randomization design. Specifically, when a UE transmits a PSCCH, the UE can randomly select a value from {0, 3, 6, 9} as a cyclic shift of a DMRS. If PSCCH DMRSs transmitted on the same time-frequency resource by multiple UEs have different cyclic shifts, a receiving UE can still detect at least one PSCCH through orthogonal DMRSs. For the same purpose, NR-V2X introduces 3 PSCCH DMRS frequency-domain orthogonal covering codes (OCCs) for randomly selecting by a transmitting UE, as illustrated in Table 1. The $i$-th bit of the OCC is applied to the $i$-th DMRS RE within a resource block (RB), so as to achieve an effect of distinguishing different UEs.

Table 1-OCC for PSCCH DMRS

| OCC index | OCC | | |
|---|---|---|---|
| | $i = 0$ | $i = 1$ | $i = 2$ |
| 0 | 1 | 1 | 1 |
| 1 | 1 | $e^{j2/3\pi}$ | $e^{-j2/3\pi}$ |
| 2 | 1 | $e^{-j2/3\pi}$ | $e^{j2/3\pi}$ |

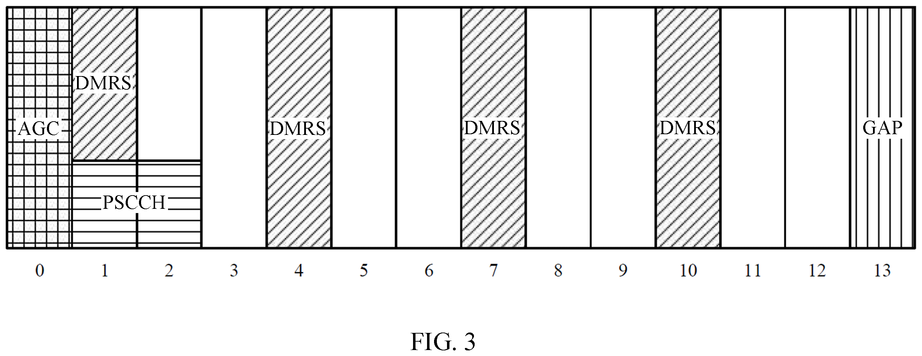

The DMRS of the PSSCH in the NR-V2X draws on a design in NR Uu interface and adopts multiple time-domain PSSCH DMRS patterns. In one resource pool, the number of available DMRS patterns is related to the number of PSSCH symbols in the resource pool. For the specific number of PSSCH symbols (including the first AGC symbol) and number of PSCCH symbols, available DMRS patterns and positions of each of the DMRS symbols in the patterns are illustrated in Table 2. FIG. 3 provides a schematic diagram of time-domain positions of 4 DMRS symbols when the number of PSCCH symbols is 13.

Table 2-numbers and positions of DMRS symbols for different numbers of PSSCH and PSCCH symbols

| number of PSSCH symbols (including the first AGC symbol) | DMRS symbol position (relative to the position of the first AGC symbol) | | | | | |
|---|---|---|---|---|---|---|
| | number of PSCCH symbols=2 | | | number of PSCCH symbols=3 | | |
| | number of DMRS symbols | | | number of DMRS symbols | | |
| | 2 | 3 | 4 | 2 | 3 | 4 |
| 6 | 1, 5 | | | 1, 5 | | |
| 7 | 1, 5 | | | 1, 5 | | |

(continued)

| number of PSSCH symbols (including the first AGC symbol) | DMRS symbol position (relative to the position of the first AGC symbol) | | | | | |
|---|---|---|---|---|---|---|
| | number of PSCCH symbols=2 | | | number of PSCCH symbols=3 | | |
| | number of DMRS symbols | | | number of DMRS symbols | | |
| | 2 | 3 | 4 | 2 | 3 | 4 |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 3 | 3, 10 | 1, 6, 11 | 1, 4, 7, 10 | 4, 10 | 1, 6, 11 | 1, 4, 7, 10 |

If multiple time-domain DMRS patterns are configured for the resource pool, the specific time-domain DMRS pattern to be adopted is selected by the transmitting UE and indicated in first-stage SCI. The design allows a UE moving at a high speed to select a high-density DMRS pattern, thus the accuracy of channel estimation can be ensured. For a UE moving at a low speed, a low-density DMRS pattern can be adopted to improve spectral efficiency.

A generation method of the PSSCH DMRS sequence is almost identical to a generation method of the PSCCH DMRS sequence, with a difference in that an initialization formula $c_{init}$ of pseudorandom sequence c(m) is generated based on cyclic redundancy check (CRC) of the PSCCH that schedules the PSSCH.

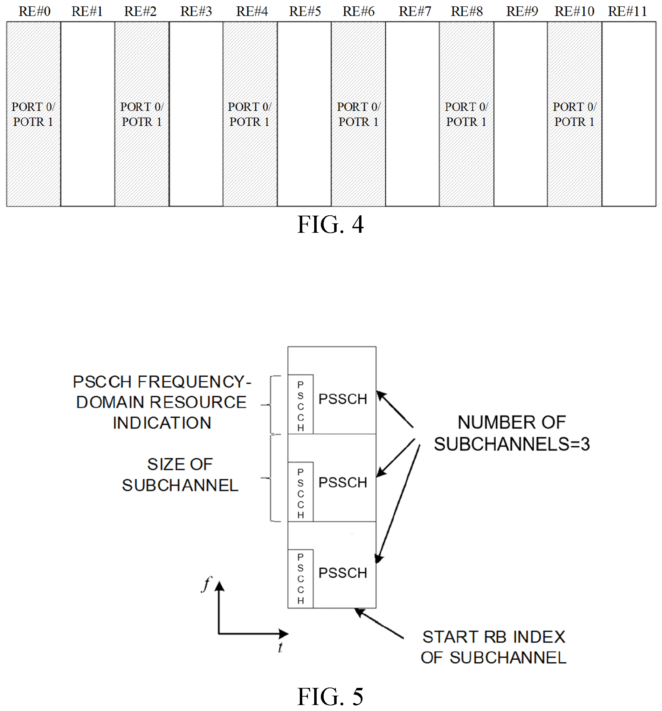

Two types of frequency-domain DMRS patterns are supported in NR physical downlink shared channel (PDSCH) and NR physical uplink shared channel (PUSCH), namely DMRS frequency-domain type 1 and DMRS frequency-domain type 2. For each frequency-domain type, there are two different types: single DMRS symbol and dual DMRS symbols. The single-symbol DMRS frequency-domain type 1 supports 4 DMRS ports, and the single-symbol DMRS frequency-domain type 2 can support 6 DMRS ports. The number of supported ports doubles in the case of dual DMRS symbols. However, in NR-V2X, since the PSSCH only needs to support up to two DMRS ports, only the single-symbol DMRS frequency-domain type 1 is supported, as illustrated in FIG. 4.

II. Determination of frequency-domain resources in NR SL

Similar to LTE-V2X, frequency-domain resources in the NR-V2X resource pool are also continuous, and a granularity of frequency-domain resources assignment is also one subchannel. The number of PRBs included in one subchannel is {10, 12, 15, 20, 50, 75, 100}, where the minimum subchannel size is 10 PRBs, which is much larger than the minimum subchannel size 4 PRBs in LTE-V2X. It is mainly because the frequency-domain resources of PSCCH in NR-V2X are within the first subchannel of the PSSCH associated with the PSCCH, and the frequency-domain resources of the PSCCH have a size less than or equal to the size of one subchannel of the PSSCH, while time-domain resources of the PSCCH occupy 2 or 3 OFDM symbols. If the subchannel size is configured to be small, available resources for the PSCCH will be limited, leading to an increase in code rate and a reduction in detection performance of the PSCCH. In NR-V2X, the size of the PSSCH subchannel and the size of the frequency-domain resources of the PSCCH are configured independently, but it is necessary to ensure that the size of the frequency-domain resources of the PSCCH is less than or equal to the size of the PSSCH subchannel. The following configuration parameters in the NR-V2X resource pool configuration information are used for determining the frequency-domain resources of the PSCCH and the PSSCH resource pools. Examples are as follows:

> (1) size of subchannel (*sl-SubchannelSize*): indicating the number of continuous PRBs included in one subchannel in the resource pool, with a value range of {10, 12, 15, 20, 50, 75, 100} PRBs;
> (2) number of subchannels (*sl-NumSubchannel*): indicating the number of subchannels included in the resource pool;
> (3) start RB index of subchannel (*sl-StartRB-Subchannel*): indicating the starting PRB index of the first subchannel in the resource pool;
> (4) number of PRBs (*sl-RB-Number*): indicating the number of continuous PRBs included in the resource pool; and
> (5) PSCCH frequency-domain resource indication (*sl-FreqResourcePSCCH*): indicating the size of the frequency-domain resources of the PSCCH, with a value range of {10, 12, 15, 20, 25} PRBs.

When a UE determines a resource pool for PSSCH transmission or PSSCH reception, the frequency-domain resources included in the resource pool are *sl-NumSubchannel* continuous subchannels starting from a PRB indicated by *sl-StartRB-Subchannel*. If the number of PRBs included in the *sl-NumSubchannel* continuous subchannels is less than the number of PRBs indicated by the *sl-RB-Number*, the remaining PRBs cannot be used for PSSCH transmission or PSSCH reception.

In NR-V2X, the frequency-domain starting position of the PSCCH is aligned with the frequency-domain position of the first subchannel of the PSSCH associated with the PSCCH. Therefore, the starting position of each subchannel of the PSSCH is a possible frequency-domain starting position of the PSCCH. The frequency-domain range of the PSCCH and PSSCH resource pools can be determined according to the above parameters, as illustrated in FIG. 5.

In NR-V2X, the PSCCH is used for carrying sidelink control information related to resource sensing, for example:

(1) a priority of the scheduled transmission;
(2) a frequency-domain resource assignment, indicating the number of frequency-domain resources of the PSSCH in a current slot scheduled by the PSCCH, as well as the number and the starting position of frequency-domain resources of up to two reserved retransmission resources;
(3) a time-domain resource assignment, indicating the time-domain positions of up to two reserved retransmission resources;
(4) a reference signal pattern of the PSSCH;
(5) a second-stage SCI format;
(6) a second-stage SCI code rate offset;
(7) the number of PSSCH DMRS ports;
(8) a modulation and coding scheme (MCS);
(9) a MCS table indication;
(10) the number of PSFCH symbols;
(11) a resource reservation period, reserving resources for transmission of another transport block (TB) within a next period, where this information bit field does not exist if inter-TB resource reservation is not activated in the resource pool configuration;
(12) reserved bits, with 2 to 4 bits, and the specific number of bits is configured or preconfigured by the network.

Since the PSCCH is always transmitted in the same slot as the scheduled PSSCH, and the starting position of the PRB occupied by the PSCCH is the starting position of the first subchannel of the scheduled PSSCH, SCI format 1-A does not explicitly indicate the time-frequency starting position of the scheduled PSSCH.

III. Determination of time-domain resources (slots) in NR SL

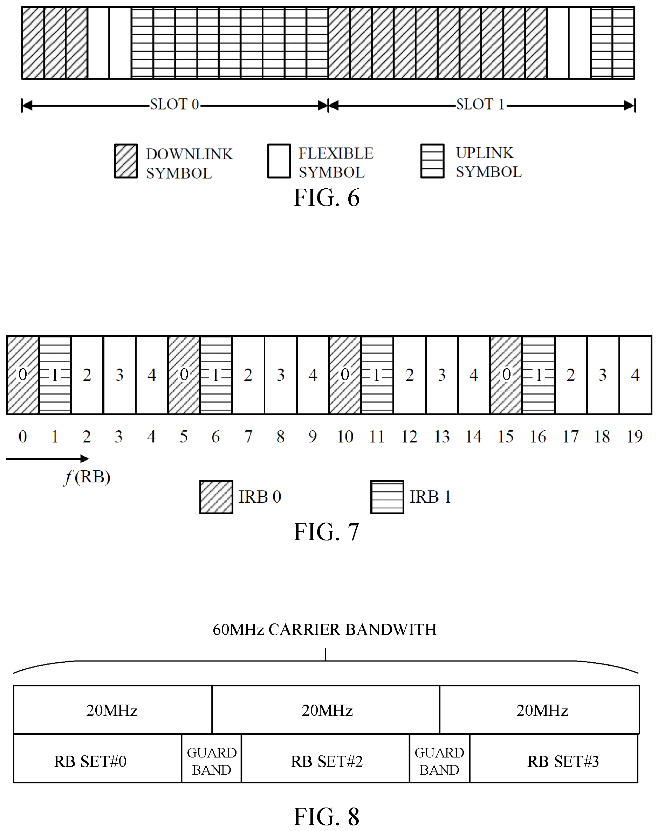

In NR-V2X, the transmission of PSCCH/PSSCH is on a slot basis, that is, only one PSCCH/PSSCH can be transmitted in one slot, and the transmission of multiple PSCCHs/PSSCHs in a single slot through time division multiplexing (TDM) is not supported. The PSCCHs/PSSCHs of different users can be multiplexed in a single slot through frequency division multiplexing (FDM). The time-domain resources of the PSSCH in NR-V2X take slot as granularity. However, different from the PSSCH in LTE-V2X which occupies all time-domain symbols in a subframe, the PSSCH in NR-V2X can occupy part of symbols in a slot. This is mainly because in the LTE system, uplink or downlink transmission also takes subframe as granularity, and therefore sidelink transmission also takes subframe as granularity (special subframes in time division duplex (TDD) system are not used for sidelink transmission). The NR system adopts a flexible slot structure, that is, one slot includes both uplink symbols and downlink symbols, which enables more flexible scheduling and can reduce latency. A subframe in the NR system is illustrated in FIG. 6, where a slot may include downlink (DL) symbols, uplink (UL) symbols, and flexible symbols. The DL symbols are at the start of the slot, the UL symbols are at the end of the slot, and flexible symbols are between the DL symbols and UL symbols. The number of each type of symbols in each slot is configurable.

A sidelink transmission system can share a carrier with a cellular system, in which case sidelink transmission can only use uplink transmission resources of the cellular system. For NR-V2X, if sidelink transmission still require to occupy all time-domain symbols in one slot, the network needs to configure the slot with all UL symbols for the sidelink transmission, which causes a significant impact on the UL and DL data transmission of the NR system and reduces system performance. Therefore, NR-V2X supports using part of the time-domain symbols in a slot for sidelink transmission, that is, part of the UL symbols in the slot are used for sidelink transmission. In addition, considering that sidelink transmission includes AGC symbols and GP symbols, if the number of UL symbols available for sidelink transmission is small, removing the AGC symbols and the GP symbols leaves even fewer symbols available for transmitting valid data, resulting in very low resource utilization. Therefore, the minimum number of time-domain symbols occupied by sidelink transmission in NR-V2X is 7 (including the GP symbols). When the sidelink transmission system uses a dedicated carrier, there is no issue of sharing transmission resources with other systems, and all symbols in a slot can be configured for sidelink transmission.

In the NR-V2X system, the time-domain resources in the resource pool are also indicated by a bitmap.

Considering the flexible slot structure of the NR system, the length of the bitmap is extended, with a supported length range of [10:160]. A method for determining slot positions belonging to the resource pool within a system frame number (SFN) period using the bitmap is the same as a determination method in LTE-V2X, but there are the following differences:

the total number of slots within one SFN period is $10240 \times 2^\mu$, where the parameter $\mu$ is related to the size of the subcarrier spacing; and
if at least one of the time-domain symbols $Y, Y+1, Y+2, ..., Y+X-1$ included in a slot is not configured as an UL symbol by *TDD-UL-DL-ConfigCommon* signaling from the network, the slot cannot be used for sidelink transmission. $Y$ represents *sl-StartSymbol* and $X$ represents *sl-LengthSymbols*.

The specific steps are as follows.

Step 1: slots that do not belong to the resource pool within the SFN period are removed, including synchronization slots and slots that cannot be used for sidelink transmission. The remaining slots are represented as a remaining slot set, and the remaining slots are renumbered as ($l_0, l_1, ..., l_{(10240 \times 2_\mu - NS\_SSB - N_{nonSL} - 1)}$).

$N_{S\_SSB}$ represents the number of synchronization slots within one SFN period. The synchronization slots are determined according to synchronization-related configuration parameters, and the synchronization slots are related to the period of transmitting synchronization signal blocks (SSB) and the number of SSB transmission resources configured within the period.

$N_{nonSL}$ represents the number of slots that do not satisfy the configuration of the starting point and the number of UL symbols within one SFN period. If at least one of the time-domain symbols $Y, Y+1, Y+2, ..., Y+X-1$ included in a slot is not semi-statically configured as an UL symbol, the slot cannot be used for sidelink transmission, where Y represents *sl-StartSymbol* and X represents *sl-LengthSymbols*.

Step 2: the number of reserved slots and corresponding time-domain positions are determined.

If the number of slots in the remaining slot set cannot be divided exactly by the length of the bitmap, the number of reserved slots and the corresponding time-domain positions need to be determined. Specifically, a slot $l_r$ ($0 \leq r < 10240 \times 2^\mu - N_{S\_SSB} - N_{nonSL}$) is a reserved slot if the slot satisfies the following condition:

$$ r = \left\lfloor \frac{m \cdot (10240 \times 2^\mu - N_{S\_SSB} - N_{nonSL})}{N_{reserved}} \right\rfloor $$

In the formula, $N_{reserved} = (10240 \times 2^\mu - N_{S\_SSB} - N_{nonSL})\ mod\ L_{bitmap}$ represents the number of reserved slots, where $L_{bitmap}$ represents the length of the bitmap, and m = 0, ..., $N_{reserved}$ - 1.

Step 3: the reserved slots from the remaining slot set are removed, and a remaining slot set is represented as a logical slot set. All slots in the set are available for the resource pool. The slots in the logical slot set are renumbered as ($t_0^{SL}, t_1^{SL}, ..., t_{T_{max}-1}^{SL}$), where $T_{max} = 10240 \times 2^\mu - N_{S\_SSB} - N_{nonSL} - N_{reserved}$.

Step 4: slots belonging to the resource pool in the logical slot set are determined according to the bitmap.

The bitmap in the resource pool configuration information is ($b_0, b_1, ..., b_{L_{bitmap}-1}$). For a slot $t_k^{SL} \left( 0 \leq k < \left( 10240 \times 2^\mu - N_{S\_SSB} - N_{nonSL} - N_{reserved} \right) \right)$ in the logical slot set, the slot belongs to the resource pool when $b_{k'} = 1$ is satisfied, where $k' = k\ mod\ L_{bitmap}$.

Step 5: the slots belonging to the resource pool determined in Step 4 are renumbered in sequence as $t_i'^{SL}, i \in \{0, 1, ..., T'_{max} - 1\}$, where $T'_{max}$ represents the number of slots included in the resource pool.

IV. First-stage SCI and second-stage SCI in NR SL

A two-stage SCI design is supported in NR SL, where the first-stage SCI used for scheduling transmission of PSSCH and/or sidelink positioning reference signal (SL PRS) is referred to as SCI format 1-A, and examples of the included information are as follows.

1. A priority of the scheduled data: 3 bits, where 000 represents priority value 1, 001 represents priority value 2, and so on.

2. A frequency resource assignment: including a frequency resource indicator value (FRIV).

If the SCI can indicate a current transmission resource and one reserved resource for retransmission of a current transport block (TB), the FRIV is $\left\lceil \log_2\left(\frac{N_{\text{subChannel}}^{\text{SL}}\left(N_{\text{subChannel}}^{\text{SL}}+1\right)}{2}\right)\right\rceil$ bits, which is used for indicating an initial subchannel index of the reserved resource and the number of subchannels included in the current transmission resource and the reserved resource.

If the SCI can indicate the current transmission resource and two reserved resources for retransmission of the current TB, the FRIV is $\left\lceil \log_2\left(\frac{N_{\text{subChannel}}^{\text{SL}}\left(N_{\text{subChannel}}^{\text{SL}}+1\right)\left(2N_{\text{subChannel}}^{\text{SL}}+1\right)}{6}\right)\right\rceil$ bits, which is used for indicating initial subchannel indexes of the two reserved resources and the number of subchannels included in the current transmission resource and the two reserved resources, where $N_{Subchannel}^{SL}$ is the number of subchannels included in the current resource pool.

3. A time resource assignment: including a time resource indicator value (TRIV).

If a PSCCH can indicate a current transmission resource and one reserved resource for retransmission of a current TB, the TRIV is 5 bits, which is used for indicating a slot interval between the reserved resource and the current transmission resource.

If a PSCCH can indicate the current transmission resource and another two reserved resources for retransmission of the current TB, the TRIV is 9 bits, which is used for indicating slot intervals between the two reserved resources and the current transmission resource, and the slot intervals are represented as the number of slots belonging to the current resource pool.

4. A reference signal pattern of PSSCH: $\left\lceil \log_2 N_{\text{pattern}}\right\rceil$ bits, where $N_{\text{pattern}}$ is the number of DMRS patterns allowed in the current resource pool.

5. A second-stage SCI format: 2 bits. 00 represents SCI format 2-A, 01 represents SCI format 2-B, 10 represents SCI format 2-C, and 11 is a reserved state for a future version.

6. A second-stage SCI code rate offset: 2 bits. 00 represents the first code rate offset value configured by an RRC layer, 01 represents the second code rate offset value configured by the RRC layer, 10 represents the third code rate offset value configured by the RRC layer, and 11 represents the fourth code rate offset value configured by the RRC layer.

7. The number of PSSCH DMRS ports: 1 bit. 0 represents one port (port 1000), and 1 represents two ports (port 1000 and port 1001).

8. An MCS: 5 bits.

9. An MCS table indication: 0 to 2 bits, depending on the number of allowed MCS tables configured in the resource pool.

10. The number of PSFCH symbols: 1 bit if the PSFCH period is 2 or 4 slots, otherwise 0 bit.

11. A resource reservation period: 4 bits, for reserving resources for transmission of another TB within the next period, where the information bit field does not exist if inter-TB resource reservation is not activated in the resource pool configuration.

12. Reserved bits: 2 to 4 bits, and the specific number of bits is configured or preconfigured by the network. If the resource pool is configured with that whether a terminal supports receiving a resource conflict indication is indicated by the least significant bit (LSB) of the reserve bits, the first reserved bit is set to "1" when the terminal supports such function, otherwise the first reserved bit is set to "0". Values of other reserved bits are all set to "0".

Four types of second-stage SCI formats are defined in NR SL, that is, SCI format 2-A, SCI format 2-B, SCI format 2-C, and SCI format 2-D.

For example, SCI format 2-A has a total of 35 bits and includes the following information:

HARQ process - 4 bits;
new data indicator (NDI) - 1 bit;
redundancy version (RV) - 2 bits;
source ID - 8 bits;
destination ID - 16 bits;
HARQ feedback activation/deactivation - 1 bit;
unicast/multicast/broadcast indication - 2 bits; where 00 indicates broadcast, 01 indicates a multicast communication mode requiring ACK or NACK feedback, 10 indicates unicast, and 11 indicates a multicast communication mode requiring only NACK feedback; and
CSI feedback request - 1 bit.

For example, SCI format 2-B has a total of 48 bits and is only used for indicating multicast service transmission.

Therefore, compared with SCI format 2-A, SCI format 2-B does not include the unicast/multicast/broadcast indication field and the CSI feedback request field, but additionally includes the following two information fields:

   zone ID - 12 bits; and
   communication distance requirement - 4 bits.

For example, SCI format 2-C is used for carrying an inter-UE coordination request or inter-UE coordination information. Information included in the indication is divided into two parts. The first part is bit fields in SCI format 2-A other than the "unicast/multicast/broadcast indication" field.

If SCI format 2-C carries the Inter-UE coordination request, the second part includes the following additional information:

   1. a trigger signaling or a reference resource set indication - 1 bit;
   2. a priority - 3 bits;
   3. the number of subchannels - $\lceil log_2 N_{Sbchannel}^{SL} \rceil$ bits, where $N_{Subchannel}^{SL}$ is the number of subchannels in the current resource pool;
   4. a resource reservation period: if periodic resource reservation is allowed in the current resource pool, the resource reservation period is $\lceil log_2 N_{rsv\_period} \rceil$ bits, where $N_{rsv\_period}$ is the total number of resource reservation periods configured in the current resource pool; and if periodic resource reservation is not allowed in the current resource pool, the resource reservation period is 0 bit;
   5. a resource selection window - $2(10 + \lceil log_2(10 \cdot 2^\mu) \rceil)$ bits, which is used for indicating the direct frame numbers (DFN) and slot indexes corresponding to the start and end of the resource selection window, and $\mu = 0,1,2,3$ is a subcarrier spacing index;
   6. a resource type: if the current resource pool is configured to have the resource type determined by UE-B, the resource type is 1 bit, otherwise the resource type is 0 bit.

If SCI format 2-C carries the inter-UE coordination information, the second part includes the following additional information:

   1. a trigger signaling or a reference resource set indication - 1 bit;
   2. two combinations of {TRIV, FRIV, reservation period} - 2($N_{TRIV}$ + $N_{FRIV}$ + Y) bits:
   $N_{TRIV}$ = 9;

$$N_{FRIV} = \left\lceil log\, 2 \left( \frac{N_{Subchannel}^{SL}(N_{Subchannel}^{SL}+1)(2N_{Subchannel}^{SL}+1)}{6} \right) \right\rceil;$$

   if periodic resource reservation is allowed in the current resource pool, $Y = \lceil log_2 N_{rsv\_period} \rceil$ bits, otherwise Y=0 bit;
   3. a time-domain position of the first resource - 8 bits, which is used for indicating an interval, in slot, of the first resource in the second TRIV relative to a reference slot, with a value range of 0~255;
   4. a reference slot - $10 + \lceil log_2(10 \cdot 2^\mu) \rceil$ bits, which is used for indicating the DFN and slot index of the reference slot, and $\mu = 0,1,2,3$ is a subcarrier spacing index;
   5. a frequency-domain position of the first resource - $2 \cdot \lceil log_2 N_{Sbchannel}^{SL} \rceil$ bits, which is used for indicating the frequency-domain start positions of the first resources in the first TRIV and the second TRIV.

For example, SCI format 2-D is used for indicating SL PRS transmission, and specifically includes the following information:

   an SL PRS resource ID - $\lceil log_2 N_{SL-PRS} \rceil$ bits, where $N_{SL-PRS}$ represents the number of SL PRS resources configured/pre-configured in one slot in a shared resource pool for SL PRS and SL communication.
   an SL PRS request - 1 bit, which is used for triggering a receiving UE to transmit SL PRS.
   an embedded SCI format - 2 bits, indicating the format of an embedded SCI, as illustrated in Table 3.

embedded SCI payload - information included in the second-stage SCI indicated by the "embedded-SCI-format" field.

Table 3-correspondence between values of embedded-SCI-format field and embedded SCI payload

| value of embedded-SCI-format field | embedded SCI format |
| --- | --- |
| 00 | SCI format 2-A |
| 01 | SCI format 2-B |
| 10 | reserved |
| 11 | reserved |

V. Sidelink transmission over unlicensed spectrum (SL-U)

When performing SL-U, sidelink transmission is required to satisfy specific regulatory requirements, including requirements for the minimum occupied channel bandwidth (OCB) and the maximum power spectral density (PSD). For the OCB requirement, when a UE uses a channel for data transmission, the occupied channel bandwidth is not less than 80% of the channel bandwidth. For the maximum PSD requirement, transmit power of the UE per 1 MHz shall not exceed 10 dBm. To satisfy the OCB and PSD regulatory requirements, the interlaced resource block (IRB) structure is required in the SL-U. One IRB includes N frequency-domain discrete RBs, and a total of $M$ IRBs are included within the frequency band range. RBs included in the m-th IRB are {$m$, $M+m$, $2M+m$, $3M+m$, ...}.

As illustrated in FIG. 7, the system bandwidth includes 20 RBs and 5 IRBs (i.e., $M$=5), and each IRB includes 4 RBs (i.e., $N$=4). The frequency-domain interval between two adjacent RBs belonging to the same IRB is the same, i.e., 5 RBs apart, and the numbers in boxes in the FIG. 7 represent IRB indexes. In the SL-U system, if the resource assignment granularity based on IRB is adopted, the PSCCH, PSSCH, and PSFCH in the SL-U system also adopt the IRB structure accordingly.

A UE accesses a channel by listen before talk (LBT) over the unlicensed spectrum. LBT has a granularity of 20 MHz in the frequency domain, with every 20 MHz referred to as an RB set. Multiple RB sets can be included in one carrier, and there are guard intervals between RB sets, as illustrated in FIG. 8.

A channel occupancy time (COT) sharing mechanism is supported in the SL-U system, which is similar to a COT sharing mechanism of NR-U. A terminal can share COT with other terminals after initiating the COT through LBT. Other terminals access the channel by using one of the Type2 LBT manners, which improves resource utilization and also facilitates channel competition among SL-U terminals. To share the COT with other terminals through indication signaling, the following information fields (referred to as COT sharing information below) need to be provided in the indication signaling:

a channel access priority class (CAPC) - 2 bits, for indicating the channel access priority of a terminal initiating the COT;

a unicast/multicast/broadcast indication - 2 bits;

COT sharing ID information - 24 bits; and

remaining COT duration - $\left\lceil \log_2(10 \cdot 2^\mu) \right\rceil$ bits, for indicating the remaining COT duration that can be attempted to use after receiving the signaling.

In the unlicensed spectrum, a UE needs to perform LBT first and can access the channel only after passing the LBT. However, the time when the UE completes the LBT is uncertain. If the UE is restricted to start transmission only from the start of a slot, the UE may miss the transmission opportunity because the UE fails to complete LBT before the start of the slot. Therefore, in SL-U, it is considered to add a transmission starting point in one slot, i.e., multi-start transmission. For example, the additional starting point can be the 3rd or 4th OFDM symbol in the slot.

VI. Positioning based on sidelink

In 3GPP, the 3GPP radio access network (RAN) conducts research on "NR positioning enhancement" and "scenarios and requirements for NR positioning use cases in coverage, partial coverage, and out-of-coverage", among which the research on "scenarios and requirements for NR positioning use cases in coverage, partial coverage, and out-of-coverage" focuses on V2X and public safety use cases. In addition, the 3GPP SA1 working group also formulates requirements for "ranging-based services", and formulates positioning accuracy requirements for industrial internet of things (IIoT) usage in out-of-coverage scenarios. 3GPP needs to research and develop sidelink positioning solutions to support the use cases, scenarios, and requirements determined in the activities.

To improve positioning accuracy, especially to achieve positioning for UEs outside cellular network coverage, 3GPP completes the feasibility and performance research of positioning technologies based on sidelink positioning reference signals in the early stage of Rel-18. Next, solutions based on sidelink positioning (including ranging/direction finding) in the NR system will be standardized, including:

1. Standardization of the sidelink positioning reference signal (SL PRS), where the SL PRS adopts the comb-based (full RE mapping mode is not excluded) frequency-domain structure, uses a sequence format based on a pseudo-random sequence, with the DL-PRS sequence as the starting point of the design, and support the maximum SL PRS bandwidth of 100 MHz in FR1.

2. Standardization of measurement for supporting the SL RTT, SL-AOA, and SL-TDOA positioning methods.

3. Standardization of SL PRS resource assignment schemes, including resource assignment scheme 1 and scheme 2, where scheme 1 corresponds to the network assigning SL PRS resources and scheme 2 corresponds to the UE autonomously selecting SL PRS resources. The shared resource pool between SL PRS and Rel-16/17/18 sidelink communication, as well as dedicated SL PRS resource pool are supported. For scheme 2, at least one of the following needs to be researched and standardized: a channel-sensing-based resource selection, a random resource selection, congestion control, and a UE-coordination-based resource selection.

4. Standardization of an open-loop power control mechanism for SL PRS transmission, etc.

As can be seen from the above description, four types of different second-stage SCI formats have been defined in NR SL at present. In the embodiments of the disclosure, when SL PRS and SL communication coexist in a resource pool over the unlicensed spectrum (also referred to as shared spectrum), SL PRS information and COT sharing information can be indicated by the second-stage SCI.

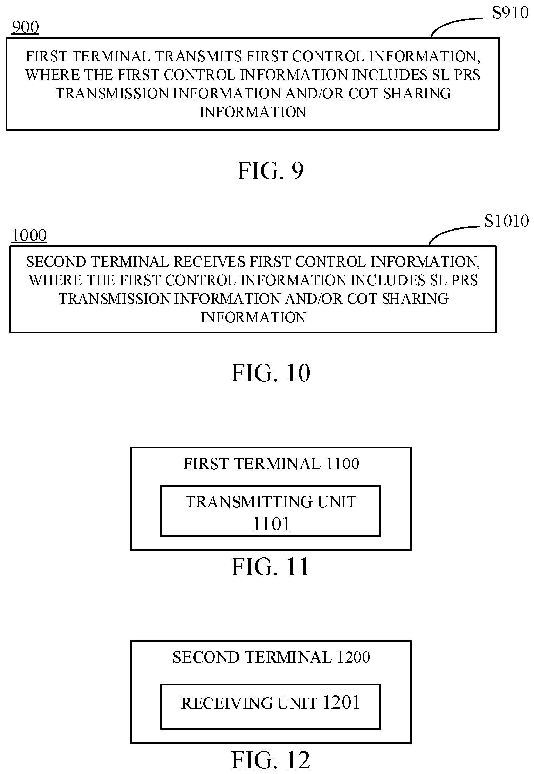

FIG. 9 is a schematic flowchart of a sidelink communication method 900 according to an embodiment of the present disclosure. The method includes at least part of the following content.

S910, a first terminal transmits first control information, where the first control information includes SL PRS transmission information and/or COT sharing information.

In the embodiments of the present disclosure, if SL PRS and SL communication coexist in a resource pool in an unlicensed spectrum (also referred to as shared spectrum), the SL PRS transmission information and the COT sharing information can be carried by the first control information. The SL PRS transmission information may be referred to as SL PRS information for short. The first control information may be sidelink control information transmitted by the first terminal to a second terminal.

In an implementation, the SL PRS transmission information includes at least one of the following:

an SL PRS resource identifier; and
an SL PRS request.

In an implementation, the COT sharing information includes at least one of the following:

a CAPC;
a unicast/multicast/broadcast indication;
COT sharing identification information; and
remaining COT duration.

For example, the channel access priority class (CAPC) may be 2 bits, which is used for indicating the channel access priority of the terminal initiating the COT.

The unicast/multicast/broadcast indication may be 2 bits, which is used for indicating that the transmission mode is unicast, multicast, or broadcast.

The COT sharing ID information may be 24 bits, which is used for indicating the identification information of the COT sharing information.

The remaining COT duration may be $\left\lceil \log_2(10 \cdot 2^\mu) \right\rceil$ bits, which is used for indicating the remaining COT duration that can be attempted to use after receiving the signaling, where $\mu$ is a subcarrier spacing index.

In an implementation, the first control information is second-stage SCI, and whether the second-stage SCI includes the SL PRS transmission information and/or the COT sharing information is indicated by first-stage SCI.

In the embodiments of the present disclosure, the SL PRS transmission information and the COT sharing information can be carried in the second-stage SCI. The first SCI transmitted by the first terminal in a resource pool can indicate whether the second-stage SCI scheduled by the first-stage SCI includes the COT sharing information. The first-stage SCI can be in a SCI format 1-A. The first-stage SCI and the second-stage SCI may be transmitted by the same information or different information. For example, the first terminal transmits the first-stage SCI and the first control information to the second terminal. The first control information includes the second-stage SCI, and the second-stage SCI includes the SL PRS transmission information and/or the COT sharing information.

In an implementation, the first-stage SCI includes a first information field, and the first information field is used for indicating whether the second-stage SCI scheduled by the first-stage SCI includes the COT sharing information.

In the embodiments of the present disclosure, the first SCI transmitted by the first terminal in a resource pool may include the first information field, where the first information field may include a newly-added bit(s) in the first SCI and may also include a reserved bit(s) in the first SCI. The first information field in the unlicensed spectrum scenario can indicate whether the second-stage SCI scheduled by the first-stage SCI includes the COT sharing information.

In an implementation, the first information field is a COT-sharing-information indication field. The first information field may also have other names, and there is no limitation on the specific name as long as the field can indicate whether the second-stage SCI includes the COT sharing information. The first information field may include one or more bits.

In an implementation, the COT-sharing-information indication field and a second-stage SCI format field in the first-stage SCI jointly indicate that the second-stage SCI format is a first format including the SL PRS transmission information and whether the first format includes the COT sharing information.

In an implementation, the second-stage SCI format includes at least one of the following information:

an embedded SCI format; and
an embedded SCI payload.

In the embodiments of the present disclosure, different values of the second-stage SCI format field indicate different second-stage SCI formats. The value of the COT-sharing-information indication field indicate whether a certain second-stage SCI format includes the COT sharing information. For example, the second-stage SCI format includes SCI format 2-A, SCI format 2-B, SCI format 2-C, and SCI format 2-D. A value of the second-stage SCI format field is 11, which indicates that the second-stage SCI format is SCI format 2-D. In this case, the value of the COT-sharing-information indication field being 1 indicates that the SCI format 2-D includes the COT sharing information, and the value of the COT-sharing-information indication field being 0 indicates that the SCI format 2-D does not include the COT sharing information. Alternatively, the value of the COT-sharing-information indication field being 0 indicates that the SCI format 2-D includes the COT sharing information, and the value of the COT-sharing-information indication field being 1 indicates that the SCI format 2-D does not include the COT sharing information.

In an implementation, the COT-sharing-information indication field and the second-stage SCI format field jointly indicate whether the first format includes a COT-sharing-information field. For example, the value of the second-stage SCI format field can indicate that the first format is SCI format 2-A, SCI format 2-B, SCI format 2-C, or SCI format 2-D. The value of the COT-sharing-information indication field can indicate whether the SCI format 2-A, the SCI format 2-B, the SCI format 2-C, or the SCI format 2-D includes the COT-sharing-information field.

In an implementation, the COT-sharing-information indication field and the second-stage SCI format field jointly indicate whether a second format or a third format in an embedded-SCI-format field of the first format includes the COT sharing information.

In an implementation, the first format includes the SCI format 2-D.

In an implementation, the second format includes SCI format 2-A, and the second format includes SCI format 2-B.

For example, the value of the second-stage SCI format field can indicate that the first format is the SCI format 2-D. The value of the COT-sharing-information indication field can indicate whether the SCI format 2-A or the SCI format 2-B in the embedded-SCI-format field of the SCI format 2-D includes the COT-sharing-information field.

In an implementation, the first-stage SCI includes a second information field, and the second information field is used for indicating that the second-stage SCI format is a fourth format in the unlicensed spectrum scenario. The fourth format includes the SL PRS transmission information and the COT sharing information, and the fourth format further includes information in the second format or the third format.

In the embodiment of the present disclosure, the second SCI format field can be reused by the second information field to indicate the second-stage SCI format and whether the second-stage SCI format includes the COT sharing information. For a licensed spectrum scenario and the unlicensed spectrum scenario, the same value of the second SCI format field can indicate different second-stage SCI formats. For example, the value of the second SCI format field is 11, which indicates a first format, e.g., SCI format 2-D, in the licensed spectrum scenario, and indicates a newly-added fourth format, e.g., SCI format 2-E, in the unlicensed spectrum scenario. In an example, the SCI format 2-E may include the SL PRS transmission information and the COT sharing information, and the SCI format 2-E may further include the information in the SCI format 2-A or the SCI format 2-B. The COT sharing information may be included in the SCI format 2-A or the SCI format 2-B in the SCI format 2-E.

In an implementation, the second information field is used for indicating that the second-stage SCI format scheduled by the first-stage SCI is the first format in the licensed spectrum scenario, and the first format includes the SL PRS transmission information.

In an implementation, the unlicensed spectrum scenario includes that, for a first SCI in SCI format 1-A transmitted in a resource pool, a current operation is accompanied by shared spectrum channel access, or a current SL BWP is configured with a parameter indicating a structure for PSCCH and PSSCH.

In an implementation, the first-stage SCI format includes the SCI format 1-A.

In an implementation, the first format includes the SCI format 2-D, and the fourth format includes the SCI format 2-E.

In an example, for the first SCI in the SCI format 1-A transmitted in the resource pool, if the current operation is accompanied by the shared spectrum channel access, or the current SL BWP is configured with a parameter indicating a structure for PSCCH and PSSCH, the SCI format 1-A may include a specific bit field such as the first information field, which is used for indicating whether the second-stage SCI scheduled by the SCI format 1-A includes the COT sharing information.

In another example, for the first SCI in the SCI format 1-A transmitted in the resource pool, if the current operation is accompanied by the shared spectrum channel access, or the current SL BWP is configured with a parameter indicating a structure for PSCCH and PSSCH, the second-stage SCI format field in the SCI format 1-A indicates the scheduled second-stage SCI format includes the SCI format 2-E. Otherwise, the second-stage SCI format field in the SCI format 1-A indicates the scheduled second-stage SCI format includes the SCI format 2-D.

In an implementation, the first-stage SCI includes a third information field. The third information field and the second-stage SCI format field in the first-stage SCI jointly indicate that the second-stage SCI format is the fourth format and the fourth format includes the SL PRS transmission information and the COT sharing information. The third information field may include one or more bits. For example, the value of the third indication field being a first value and the value of the second-stage SCI format field being a second value, can jointly indicate that the second-stage SCI format is a newly-added fourth format such as the SCI format 2-E. For specific examples of information in the SCI format 2-E, reference may be made to the relevant descriptions of the above embodiments. For example, the first value may be 1 or 0, and the second value may be 00, 01, 10, 11, etc. For another example, the first value may be 11 or 00, and the second value may be 000, 001, 010, 011, etc.

In an implementation, the third information field is an additional format field. In the embodiments of the disclosure, the additional format field may also be referred to as an additional indication field, an additional format indication field, etc., which can be used for indicating more second-stage SCI formats. For example, when the additional format field is 0, the value of the second-stage SCI format field indicates an original second-stage SCI format. When the additional format field is 1, the value of the second-stage SCI format field indicates a newly-added second-stage SCI format. Alternatively, when the additional format field is 1, the value of the second-stage SCI format field indicates the original second-stage SCI format. When the additional format field is 0, the value of the second-stage SCI format field indicates the newly-added second-stage SCI format. For example, the additional format field is 0 and the value of the second-stage SCI format field is 00, which indicates the SCI format 2-A. The additional format field is 1 and the value of the second-stage SCI format field is 00, which indicates the SCI format 2-E. The third information field may also have other names, and there is no limitation on the specific name as long as the field can indicate more second-stage SCI formats.

In an implementation, the first-stage SCI includes a fourth information field. The fourth information field and the second-stage SCI format field jointly indicate that the second-stage SCI format includes the fourth format and a fifth format. In the embodiments of the disclosure, the fourth information field and the second-stage SCI format field jointly indicate two newly-added second-stage SCI formats. The fourth information field may include one or more bits. For example, the value of the fourth indication field being a third value and the value of the second-stage SCI format field being a fourth value, can jointly indicate that the second-stage SCI format is a newly-added fourth format such as the SCI format 2-E and that a fifth format such as a SCI format 2-F. For example, the third value may be 1 or 0, and the fourth value may be 00, 01, 10, 11, etc. For another example, the third value may be 11 or 00, and the fourth value may be 000, 001, 010, 011, etc.

In an implementation, the fourth information field is an additional format field. For example, the additional format field being 0 and the value of the second-stage SCI format field being 00 jointly indicate the SCI format 2-A. The additional format field being 1 and the value of the second-stage SCI format field being 00 jointly indicate the SCI format 2-E. The additional format field being 0 and the value of the second-stage SCI format field being 01 jointly indicate the SCI format 2-B. The additional format field being 1 and the value of the second-stage SCI format field being 01 jointly indicate the SCI format 2-F. The fourth information field may also have other names, and there is no limitation on the specific name as long as the field can indicate more second-stage SCI formats.

In an implementation, the fourth format includes the SL PRS transmission information, the COT sharing information, and the information in the second format. The fifth format includes the SL PRS transmission information, the COT sharing information, and the information in the third format.

In an implementation, the fourth format includes the SCI format 2-E, and the fifth format includes the SCI format 2-F.

In the embodiments of the disclosure, each of the two newly-added SCI formats jointly indicated by the fourth information field and the second-stage SCI format field can include the SL PRS transmission information and the COT sharing information, and can further include information of an existing second-stage SCI format. For example, the second format is the SCI format 2-A, the third format is the SCI format 2-B, the fourth format is the SCI format 2-E, and the fifth format is the SCI format 2-F. The SCI format 2-E includes the information in SCI format 2-A, the SL PRS transmission information, and the COT sharing information. The SCI format 2-F includes the information in the SCI format 2-B, the SL PRS transmission information, and the COT sharing information.

In an implementation, the first-stage SCI includes a fifth information field. The fifth information field and the second-stage SCI format field in the first-stage SCI jointly indicate that the second-stage SCI format includes the fourth format, the fifth format, and a sixth format.

In an implementation, the fourth format includes the SCI format 2-E, the fifth format includes the SCI format 2-F, and the sixth format includes a SCI format 2-G.

In the embodiments of the disclosure, three newly-added second-stage SCI formats are jointly indicated by the fifth information field and the second-stage SCI format field. The fifth information field can include one or more bits. For example, the value of the fifth indication field being a fifth value and the value of the second-stage SCI format field being a sixth value, can jointly indicate that the second-stage SCI format is a newly-added fourth format such as the SCI format 2-E, a newly-added fifth format such as the SCI format 2-F, and a newly-added sixth format such as SCI format 2-G. For example, the fifth value may be 1 or 0, and the sixth value may be 00, 01, 10, 11, etc. For another example, the fifth value may be 11 or 00, and the sixth value may be 000, 001, 010, 011, etc.

In an implementation, the fifth information field is an additional format field. For example, the additional format field being 0 and the value of the second-stage SCI format field being 00 indicate the SCI format 2-A. The additional format field being 1 and the value of the second-stage SCI format field being 00 indicate the SCI format 2-E. The additional format field being 0 and the value of the second-stage SCI format field being 01 indicate the SCI format 2-B. The additional format field being 1 and the value of the second-stage SCI format field being 01 indicate the SCI format 2-F. The additional format field being 0 and the value of the second-stage SCI format field being 10 indicate the SCI format 2-C. The additional format field being 1 and the value of the second-stage SCI format field being 10 indicate the SCI format 2-G. The fifth information field may also have other names, and there is no limitation on the specific name as long as the field can indicate more second-stage SCI formats.

In an implementation, an embedded-SCI-format field in the sixth format is used for indicating the fourth format or the fifth format. The fourth format includes the COT sharing information and the information in the second format, and the fifth format includes the COT sharing information and the information in the third format. In the embodiments of the disclosure, each of the three newly-added SCI formats jointly indicated by the fourth information field and the second-stage SCI format field can include the COT sharing information, and can further include information of an existing second-stage SCI format. For example, the second format is the SCI format 2-A, the third format is the SCI format 2-B, the fourth format is the SCI format 2-E, and the fifth format is the SCI format 2-F. The SCI format 2-E includes information in the SCI format 2-A and the COT sharing information. The SCI format 2-F includes information in SCI format 2-B and the COT sharing information.

In an implementation, the sixth format further includes the SL PRS transmission information. In the embodiments of the disclosure, the fourth format and the fifth format may not include the SL PRS transmission information, but the sixth format such as the SCI format 2-G may include the SL PRS transmission information.

FIG. 10 is a schematic flowchart of a sidelink communication method 1000 according to an embodiment of the present disclosure. The method includes at least part of the following content.

S1010, first control information is received by a second terminal, where the first control information includes SL PRS transmission information and/or COT sharing information.

In an implementation, the first control information is second-stage SCI, and whether the second-stage SCI includes the SL PRS transmission information and/or the COT sharing information is indicated by first-stage SCI.

In an implementation, the first-stage SCI includes a first information field used for indicating whether the second-stage SCI scheduled by the first-stage SCI includes the COT sharing information.

In an implementation, the first information field is a COT-sharing-information indication field.

In an implementation, the COT-sharing-information indication field and the second-stage SCI format field in the first-stage SCI jointly indicate that the second-stage SCI format is a first format including the SL PRS transmission information and whether the first format includes the COT sharing information.

In an implementation, the COT-sharing-information indication field and the second-stage SCI format field jointly indicate whether the first format includes the COT-sharing-information field.

In an implementation, the COT-sharing-information indication field and the second-stage SCI format field jointly indicate whether a second format or a third format in an embedded-SCI-format field in the first format includes the COT sharing information.

In an implementation, the first-stage SCI includes a second information field, and the second information field is used for indicating that in an unlicensed spectrum scenario, a second-stage SCI format is a fourth format. The fourth format includes the SL PRS transmission information and the COT sharing information, and the fourth format further includes information in a second format or a third format.

In an implementation, the second information field is used for indicating that in a licensed spectrum scenario, the second-stage SCI format scheduled by the first-stage SCI is the first format, and the first format includes the SL PRS transmission information.

In an implementation, the unlicensed spectrum scenario includes that for the first SCI in a SCI format 1-A transmitted in a resource pool, a current operation is accompanied by shared spectrum channel access, or a current SL BWP is configured with a parameter indicating a structure for PSCCH and PSSCH.

In an implementation, the first-stage SCI includes a third information field, and the third information field and a second-stage SCI format field in the first-stage SCI jointly indicate that the second-stage SCI format is the fourth format and the fourth format includes the SL PRS transmission information and the COT sharing information.

In an implementation, the third information field is an additional format field.

In an implementation, the first-stage SCI includes a fourth information field, and the fourth information field and the second-stage SCI format field jointly indicate that the second-stage SCI format includes the fourth format and a fifth format.

In an implementation, the fourth information field is an additional format field.

In an implementation, the fourth format includes the SL PRS transmission information, the COT sharing information, and the information in the second format. The fifth format includes the SL PRS transmission information, the COT sharing information, and the information in the third format.

In an implementation, the first-stage SCI includes a fifth information field. The fifth information field and the second-stage SCI format field in the first-stage SCI jointly indicate that the second-stage SCI format includes the fourth format, the fifth format, and a sixth format.

In an implementation, the fifth information field is an additional format field.

In an implementation, an embedded-SCI-format field in the sixth format is used for indicating the fourth format or the fifth format. The fourth format includes the COT sharing information and the information in the second format, and the fifth format includes the COT sharing information and the information in the third format.

In an implementation, the sixth format further includes the SL PRS transmission information.

In an implementation, the first format includes a SCI format 2-D.

In an implementation, the second format includes a SCI format 2-A, and the second format includes a SCI format 2-B.

In an implementation, the fourth format includes a SCI format 2-E.

In an implementation, the fifth format includes a SCI format 2-F.

In an implementation, the sixth format includes a SCI format 2-G.

In an implementation, the first-stage SCI format includes a SCI format 1-A.

In an implementation, the second-stage SCI format includes at least one of the following information:

an embedded SCI format; and
an embedded SCI payload.

In an implementation, the SL PRS transmission information includes at least one of the following:

an SL PRS resource identifier; and
an SL PRS request.

In an implementation, the COT sharing information includes at least one of the following:

a CAPC;
a unicast/multicast/broadcast indication;
COT sharing identification information; and
remaining COT duration.

For specific examples of the second terminal performing the method 1000 in the present embodiment, reference may be made to the relevant descriptions about the second terminal in the above method 900, and details are not repeated herein for brevity.

The sidelink communication method in the embodiments of the disclosure may include a control information transmission method in sidelink positioning based on unlicensed spectrum, which may mainly include the following manners.

Manner 1: SL PRS transmission information and COT sharing information are indicated by SCI format 2-D. Over unlicensed spectrum, SCI format 1-A includes a bit field, which indicates whether the scheduled SCI format 2-D includes the COT sharing information. The bit field may be an additional bit field or one of the reserved bit fields.

Manner 2: SL PRS transmission information and COT sharing information are indicated by a new second-stage SCI. For example, SCI format 2-E may include one of SCI format 2-A and SCI format 2-B, and may further include the COT sharing information and the SL PRS transmission information.

Manner 3: COT sharing information and SL PRS transmission information are transmitted by at least two new second-stage SCI formats. For example, SCI format 2-E can include SCI format 2-A, the COT sharing information, and the SL PRS transmission information. SCI format 2-F may include SCI format 2-B, the COT sharing information, and the SL PRS transmission information.

Manner 4: COT sharing information is transmitted by at least two new second-stage SCI formats. For example, SCI format 2-E may include SCI format 2-A and the COT sharing information. SCI format 2-F may include SCI format 2-B and the COT sharing information. In addition, SL PRS transmission information is indicated by SCI format 2-D or SCI format 2-G. For example, the SCI format 2-G may include the SCI format 2-E or the SCI format 2-F.

In embodiments of the disclosure, the SL PRS transmission information and the COT sharing information may be indicated by second-stage SCI transmitted over unlicensed spectrum. Several specific examples are provided below.

<u>Example 1: SL PRS transmission information is indicated by SCI format 2-D, and SCI format 2-D may include COT sharing information.</u>

In the example, for SCI format 1-A transmitted in a resource pool, if a current operation is accompanied by shared spectrum channel access, or a current SL BWP is configured with a parameter indicating a structure for PSCCH and PSSCH (*sl-TransmissionStructureForPSCCHandPSSCH*), the SCI format 1-A includes a specific bit field for indicating whether second-stage SCI scheduled by the SCI format 1-A includes COT sharing information. The bit field is referred to as a COT-sharing-information indication field below. The COT-sharing-information indication field may be an additional bit field on the basis of the existing bit fields of the SCI format 1-A, or a specific bit in the reserved bit field of the SCI format 1-A.

When SL PRS resources are configured/pre-configured in the resource pool, i.e., the current resource pool is a shared resource pool for SL PRS and SL communication, the transmission of the SL PRS and the COT sharing information can be indicated by the "COT-sharing-information indication" field and a "second-stage SCI format" field. An example is illustrated in Table 4.

Table 4 - correspondence among values of "COT-sharing-information indication" field, values of "second-stage SCI format" field, and second-stage SCI formats

| value of "COT-sharing-information indication" field | value of "second-stage SCI format" field | second-stage SCI format |
|---|---|---|
| 0 | 00 | SCI format 2-A, not including COT sharing information |
| 0 | 01 | SCI format 2-B, not including COT sharing information |
| 0 | 10 | SCI format 2-C, not including COT sharing information |
| 0 | 11 | SCI format 2-D, where an "embedded SCI payload" field is SCI format 2-A or SCI format 2-B that does not include COT sharing information |
| 1 | 00 | SCI format 2-A, including COT sharing information |
| 1 | 01 | SCI format 2-B, including COT sharing information |
| 1 | 10 | SCI format 2-C, including COT sharing information |
| 1 | 11 | SCI format 2-D, where the "embedded SCI payload" field is SCI format 2-A or SCI format 2-B that includes COT sharing information |

For another example, whether the SCI format 2-D includes the COT sharing information may be indicated by the "COT-sharing-information indication" field and the "second-stage SCI format" field. An example is illustrated in Table 5.

Table 5-correspondence among values of "COT-sharing information indication" field, values of "second-stage SCI format" field, and second-stage SCI formats

| value of " COT-sharing-information indication" field | value of "second-stage SCI format" field | second-stage SCI format |
|---|---|---|
| 0 | 00 | SCI format 2-A, not including COT sharing information |
| 0 | 01 | SCI format 2-B, not including COT sharing information |
| 0 | 10 | SCI format 2-C, not including COT sharing information |
| 0 | 11 | SCI format 2-D, not including COT sharing information |
| 1 | 00 | SCI format 2-A, including COT sharing information |
| 1 | 01 | SCI format 2-B, including COT sharing information |
| 1 | 10 | SCI format 2-C, including COT sharing information |
| 1 | 11 | SCI format 2-D, including COT sharing information |

The example can reuse the second-stage SCI formats, avoiding introducing additional second-stage SCI formats, which helps reduce the complexity of terminal implementation.

**Example 2: a new second-stage SCI format carrying SL PRS transmission information and COT sharing information is transmitted.**

In the example, a new second-stage SCI format can be defined, such as SCI format 2-E. The SCI format 2-E includes a COT-sharing-information field, an embedded-SCI-format indication field, embedded SCI payload, and an SL PRS-transmission-information indication field. A UE indicates, by transmitting SCI format 2-E, the COT sharing information and information indicating data reception in SCI format 2-A or SCI format 2-B. Information in SCI format 2-C is not transmitted through the SCI format 2-E.

According to a first implementation of the example, for the SCI format 1-A transmitted in a resource pool, if a current operation is accompanied by shared spectrum channel access, or a current SL BWP is configured with a parameter indicating a structure for PSCCH and PSSCH (*sl-TransmissionStructureForPSCCHandPSSCH*), a "second-stage SCI format" field in the SCI format 1-A indicates a format of a scheduled second-stage SCI, including SCI format 2-E, as illustrated in Table 6.

Table 6-value of "second-stage SCI format" field indicates SCI format 2-E over unlicensed spectrum

| value of "second-stage SCI format" field | second-stage SCI format |
|---|---|
| 00 | SCI format 2-A |
| 01 | SCI format 2-B |
| 10 | SCI format 2-C |
| 11 | SCI format 2-E (over unlicensed spectrum) |

According to a second implementation of the example, for the SCI format 1-A transmitted in a resource pool, if a current operation is accompanied by shared spectrum channel access, or a current SL BWP is configured with a parameter indicating a structure for PSCCH and PSSCH (*sl-TransmissionStructureForPSCCHandPSSCH*), the SCI format 1-A includes a specific bit field, referred to as an "additional format indication" field for short below. The "additional format indication" field and the "second-stage SCI format" field jointly indicate that a format of a scheduled second-stage SCI, including SCI format 2-E, as illustrated in Table 7.

Table 7-correspondence among values of "additional format indication" field, values of "second-stage SCI format" field, and second-stage SCI formats

| value of "additional format indication" field | value of "second-stage SCI format" field | second-stage SCI format |
|---|---|---|
| 0 | 00 | SCI format 2-A |
| 0 | 01 | SCI format 2-B |
| 0 | 10 | SCI format 2-C |
| 0 | 11 | SCI format 2-D |

(continued)

| value of "additional format indication" field | value of "second-stage SCI format" field | second-stage SCI format |
|---|---|---|
| 1 | 00 | SCI format 2-E |
| 1 | 01 | Reserved |
| 1 | 10 | Reserved |
| 1 | 11 | Reserved |

For example, the following information can be transmitted by SCI format 2-E:

1. a CAPC - 2 bits, which is used for indicating the channel access priority of a terminal that initiates the COT;

2. a unicast/multicast/broadcast indication - 2 bits;

3. COT sharing ID information - 24 bits;

4. remaining COT duration - $\lceil \log_2(10 \cdot 2^\mu) \rceil$ bits, which is used for indicating the remaining COT duration that can be attempted to use after receiving the signaling;

5. an embedded SCI format - 2 bits, indicating the format of the embedded SCI, as illustrated in Table 8;

6. embedded SCI payload -information included in the second-stage SCI indicated by the "embedded SCI format" field;

7. SL PRS transmission information or reserved bits, where in case of the SL PRS transmission information, the following are included:

(1) SL PRS resource ID - $\lceil \log_2 N_{\text{SL-PRS}} \rceil$ bits, where $N_{\text{SL-PRS}}$ represents the number of SL PRS resources configured/pre-configured in one slot in a shared resource pool for SL PRS and SL communication;

(2) SL PRS request - 1 bit, for triggering a receiving UE to transmit SL PRS.

Table 8-correspondence among values of embedded SCI format field, values of embedded SCI payloads, and "SL PRS transmission information"

| value of embedded SCI format field | embedded SCI payload | SL PRS transmission information or reserved bits |
|---|---|---|
| first value, e.g., 00 | SCI format 2-A and padding bits, where the number of padding bits ensures that the total number of bits is the same as the number of bits when the embedded SCI payload is SCI format 2-B | reserved bits |
| second value, e.g., 01 | SCI format 2-B | reserved bits |
| third value, e.g., 10 | SCI format 2-A and padding bits, where the number of padding bits ensures that the total number of bits is the same as the number of bits when the embedded SCI payload is SCI format 2-B | SL PRS transmission information |
| fourth value, e.g., 11 | SCI format 2-B | SL PRS transmission information |

In the example, a UE can simultaneously indicate SL PRS and COT sharing information by transmitting a new second-stage SCI format, which helps reduce the number of second-stage SCI that the UE needs to support. Meanwhile, through the first implementation of the example, the increase in the number of bits of SCI format 1-A can also be avoided.

**Example 3: at least two second-stage SCI formats capable of carrying SL PRS transmission information and COT sharing information are defined, and a UE transmits one of the formats to indicate the SL PRS and the COT sharing information.**

In the example, at least two new second-stage SCI formats can be defined, such as SCI format 2-E and SCI format 2-F. SCI format 2-E includes an SL PRS-transmission-information field, a COT-sharing-information field, and information in SCI format 2-A. SCI format 2-F includes the SL PRS-transmission-information field, the COT-sharing-information field, and information in SCI format 2-B. A UE indicates, by transmitting the SCI format 2-E or SCI format 2-F, the SL PRS, the COT sharing information, and information indicating data reception in the SCI format 2-A or SCI format 2-B.

Specifically, the following information is transmitted by the SCI format 2-E or 2-F. It should be specially noted that the disclosure does not limit the order of the following information fields:

1. a CAPC - 2 bits, for indicating the channel access priority of a terminal that initiates the COT;
2. a unicast/multicast/broadcast indication - 2 bits;
3. COT sharing ID information - 24 bits;

4. remaining COT duration - $\left\lceil \log_2(10 \cdot 2^\mu) \right\rceil$ bits, for indicating the remaining COT duration that can be attempted to use after receiving the signaling;

5. information in SCI format 2-A (in case of the SCI format 2-E) or information in SCI format 2-B (in case of the SCI format 2-F);
6. SL PRS transmission information, which can include the following exemplary implementation:

For a first implementation, examples of information fields included in the bit field are as follows:

(1) an SL PRS resource ID - $\left\lceil \log_2 N_{\text{SL-PRS}} + 1 \right\rceil$ bits, where $N_{\text{SL-PRS}}$ represents the number of SL PRS resources configured/pre-configured in one slot in a shared resource pool for SL PRS and SL communication. A value of the field, for example, the value $N_{\text{SL-PRS}}$, indicates that no SL PRS is transmitted in a current slot;
(2) an SL PRS request - 1 bit, for triggering a receiving UE to transmit SL PRS.

For a second implementation, examples of information fields included in the bit field are as follows:

(1) SL PRS activation/deactivation - 1 bit, for indicating whether to transmit SL PRS in a current slot;

(2) an SL PRS resource ID - $\left\lceil \log_2 N_{\text{SL-PRS}} \right\rceil$ bits, where $N_{\text{SL-PRS}}$ represents the number of SL PRS resources configured/pre-configured in one slot in a shared resource pool for SL PRS and SL communication;
(3) an SL PRS request - 1 bit, for triggering a receiving UE to transmit SL PRS.

In the example, for SCI format 1-A transmitted in a resource pool, if a current operation is accompanied by shared spectrum channel access, or a current SL BWP is configured with a parameter indicating a structure for PSCCH and PSSCH (*sl-TransmissionStructureForPSCCHandPSSCH*), the SCI format 1-A includes a specific bit field, referred to as an "additional format indication" field for short below. The "additional format indication" field and the "second-stage SCI format" field jointly indicate that a format of the scheduled second-stage SCI, including SCI format 2-E and 2-F.

An example of the scheduled second-stage SCI format jointly indicated by the "additional format indication" field and the "second-stage SCI format" field is illustrated in Table 9.

Table 9-correspondence between values of "additional format indication" field and values of "second-stage SCI format" field and second-stage SCI formats

| value of "additional format indication" field | value of "second-stage SCI format" field | second-stage SCI format |
|---|---|---|
| 0 | 00 | SCI format 2-A |
| 0 | 01 | SCI format 2-B |
| 0 | 10 | SCI format 2-C |
| 0 | 11 | SCI format 2-D |
| 1 | 00 | SCI format 2-E |

(continued)

| value of "additional format indication" field | value of "second-stage SCI format" field | second-stage SCI format |
|---|---|---|
| 1 | 01 | SCI format 2-F |
| 1 | 10 | reserved |
| 1 | 11 | reserved |

Since the number of bits of SCI format 2-B is greater than the number of bits of SCI format 2-A, in example 2, padding bits need to be transmitted when the COT sharing information is transmitted together with the SCI format 2-A. The example 3 can avoid the problem and reduce the data volume in the transmitted control information.

**Example 4: two second-stage SCI formats capable of carrying COT sharing information are defined, as well as a second-stage SCI format that includes one of the above formats and SL PRS transmission.**

In the example, two new second-stage SCI formats can be defined, such as SCI format 2-E and SCI format 2-F. The SCI format 2-E and the 2-F can include basically the same information as in example 3, but does not include SL PRS transmission information.

For example, UE indicates transmission of SL PRS and COT sharing information by transmitting SCI format 2-G, where the SCI format 2-G includes the following exemplary information fields:

1. an SL PRS resource ID - $\lceil \log_2 N_{SL-PRS} \rceil$ bits, where $N_{SL\text{-}PRS}$ represents the number of SL PRS resources configured/pre-configured in one slot in a shared resource pool for SL PRS and SL communication;
2. an SL PRS request - 1 bit, for triggering a receiving UE to transmit SL PRS;
3. an embedded SCI format - 1 bit or 2 bits, indicating the format of the embedded SCI, as illustrated in Table 10;
4. embedded SCI payload -information included in the second-stage SCI indicated by the "embedded-SCI-format" field.

Table 10-correspondence between values of embedded-SCI-format field and embedded SCI payload

| value of embedded-SCI-format field | embedded SCI format |
|---|---|
| first value, e.g., 0 or 00 | SCI format 2-E and padding bits, where the number of padding bits ensures that the total number of bits is the same as the number of bits when the embedded SCI payload is SCI format 2-F |
| second value, e.g., 1 or 01 | SCI format 2-F |
| third value 10 | reserved |
| fourth value 11 | reserved |

The sidelink communication method in the embodiments of the disclosure is a method for indicating SL PRS and COT sharing information. With the method in the embodiments of the disclosure, the complexity of transmitting and receiving sidelink control information by the UE can be reduced.

The above examples only include several implementation schemes, and other extended schemes can also be used to indicate SL PRS and COT sharing information, with examples as follows.

In a first extended scheme, the COT sharing information is transmitted by SCI format 2-C, and the resource pool configuration ensures that the SCI format 2-C can carry the COT sharing information and SCI format 2-B. The following cases can be included when indicating SL PRS transmission:

1.SL PRS transmission is indicated only by SCI format 2-D, and the SL PRS is not transmitted in the same slot as the COT sharing information; or
2.when only the SL PRS is transmitted, SCI format 2-D is used, and when both the SL PRS and the COT sharing information are transmitted, SCI format 2-E is used, where the SCI format 2-E includes SL PRS indication information and SCI format 2-C.

In a second extended scheme, on the basis of the example 3, a new second-stage SCI format can be further defined, such as SCI format 2-G. The SCI format 2-G includes an SL PRS-transmission-information field, a COT-sharing-information field, and information in SCI format 2-C.

FIG. 11 is a schematic block diagram of a first terminal 1100 according to an embodiment of the present disclosure. The first terminal 1100 may include a transmitting unit 1101 configured to transmit first control information, where the first control information includes SL PRS transmission information and/or COT sharing information.

In an implementation, the first control information is second-stage SCI, and whether the second-stage SCI includes the SL PRS transmission information and/or the COT sharing information is indicated by first-stage SCI.

In an implementation, the first-stage SCI includes a first information field used for indicating whether the second-stage SCI scheduled by the first-stage SCI includes the COT sharing information.

In an implementation, the first information field is a COT-sharing-information indication field.

In an implementation, the COT-sharing-information indication field and the second-stage SCI format field in the first-stage SCI jointly indicate that the second-stage SCI format is a first format including the SL PRS transmission information and whether the first format includes the COT sharing information.

In an implementation, the COT-sharing-information indication field and the second-stage SCI format field jointly indicate whether the first format includes the COT-sharing-information field.

In an implementation, the COT-sharing-information indication field and the second-stage SCI format field jointly indicate whether a second format or a third format in an embedded-SCI-format field in the first format includes the COT sharing information.

In an implementation, the first-stage SCI includes a second information field, and the second information field is used for indicating that in an unlicensed spectrum scenario, the second-stage SCI format is a fourth format. The fourth format includes the SL PRS transmission information and the COT sharing information, and the fourth format further includes information in a second format or a third format.

In an implementation, the second information field is used for indicating that in a licensed spectrum scenario, the second-stage SCI format scheduled by the first-stage SCI is the first format, and the first format includes the SL PRS transmission information.

In an implementation, the unlicensed spectrum scenario includes that for the first SCI in SCI format 1-A transmitted in a resource pool, a current operation is accompanied by shared spectrum channel access, or a current SL BWP is configured with a parameter indicating a structure for PSCCH and PSSCH.

In an implementation, the first-stage SCI includes a third information field, and the third information field and a second-stage SCI format field in the first-stage SCI jointly indicate that the second-stage SCI format is the fourth format and the fourth format includes the SL PRS transmission information and the COT sharing information.

In an implementation, the third information field is an additional format field.

In an implementation, the first-stage SCI includes a fourth information field, and the fourth information field and the second-stage SCI format field jointly indicate that the second-stage SCI format includes the fourth format and a fifth format.

In an implementation, the fourth information field is an additional format field.

In an implementation, the fourth format includes the SL PRS transmission information, the COT sharing information, and the information in the second format. The fifth format includes the SL PRS transmission information, the COT sharing information, and the information in the third format.

In an implementation, the first-stage SCI includes a fifth information field. The fifth information field and the second-stage SCI format field in the first-stage SCI jointly indicate that the second-stage SCI format includes the fourth format, the fifth format, and a sixth format.

In an implementation, the fifth information field is an additional format field.

In an implementation, an embedded-SCI-format field in the sixth format is used for indicating the fourth format or the fifth format. The fourth format includes the COT sharing information and the information in the second format, and the fifth format includes the COT sharing information and the information in the third format.

In an implementation, the sixth format further includes the SL PRS transmission information.

In an implementation, the first format includes a SCI format 2-D.

In an implementation, the second format includes a SCI format 2-A, and the second format includes a SCI format 2-B.

In an implementation, the fourth format includes a SCI format 2-E.

In an implementation, the fifth format includes a SCI format 2-F.

In an implementation, the sixth format includes a SCI format 2-G.

In an implementation, the first-stage SCI format includes a SCI format 1-A.

In an implementation, the second-stage SCI format includes at least one of the following information:

an embedded SCI format; and
an embedded SCI payload.

In an implementation, the SL PRS transmission information includes at least one of the following:

an SL PRS resource identifier; and
an SL PRS request.

In an implementation, the COT sharing information includes at least one of the following:

a CAPC;
a unicast/multicast/broadcast indication;
COT sharing identification information; and
remaining COT duration.

The first terminal 1100 of the embodiment of the disclosure can implement the corresponding functions of the first terminal in the foregoing method embodiments. For the processes, functions, implementation manners, and beneficial effects corresponding to each module (sub-module, unit, or component, etc.) in the first terminal 1100, reference can be made to the corresponding descriptions in the above method embodiments, and details are not repeated herein. It should be noted that the functions described for each module (sub-module, unit, or component, etc.) in the first terminal 1100 of the embodiment of the disclosure can be implemented by different modules (sub-modules, units, or components, etc.) or by the same module (sub-module, unit, or component, etc.).

FIG. 12 is a schematic block diagram of a second terminal 1200 according to an embodiment of the present disclosure. The second terminal 1200 may include a receiving unit 1201 configured to receive first control information, where the first control information includes SL PRS transmission information and/or COT sharing information.

In an implementation, the first control information is second-stage SCI, and whether the second-stage SCI includes the SL PRS transmission information and/or the COT sharing information is indicated by first-stage SCI.

In an implementation, the first-stage SCI includes a first information field used for indicating whether the second-stage SCI scheduled by the first-stage SCI includes the COT sharing information.

In an implementation, the first information field is a COT-sharing-information indication field.

In an implementation, the COT-sharing-information indication field and the second-stage SCI format field in the first-stage SCI jointly indicate that the second-stage SCI format is a first format including the SL PRS transmission information and whether the first format includes the COT sharing information.

In an implementation, the COT-sharing-information indication field and the second-stage SCI format field jointly indicate whether the first format includes the COT-sharing-information field.

In an implementation, the COT-sharing-information indication field and the second-stage SCI format field jointly indicate whether a second format or a third format in an embedded-SCI-format field in the first format includes the COT sharing information.

In an implementation, the first-stage SCI includes a second information field, and the second information field is used for indicating that in an unlicensed spectrum scenario, a second-stage SCI format is a fourth format. The fourth format includes the SL PRS transmission information and the COT sharing information, and the fourth format further includes information in a second format or a third format.

In an implementation, the second information field is used for indicating that in a licensed spectrum scenario, the second-stage SCI format scheduled by the first-stage SCI is the first format, and the first format includes the SL PRS transmission information.

In an implementation, the unlicensed spectrum scenario includes that for the first SCI in SCI format 1-A transmitted in a resource pool, a current operation is accompanied by shared spectrum channel access, or a current SL BWP is configured with a parameter indicating a structure for PSCCH and PSSCH.

In an implementation, the first-stage SCI includes a third information field, and the third information field and a second-stage SCI format field in the first-stage SCI jointly indicate that the second-stage SCI format is the fourth format and the fourth format includes the SL PRS transmission information and the COT sharing information.

In an implementation, the third information field is an additional format field.

In an implementation, the first-stage SCI includes a fourth information field, and the fourth information field and the second-stage SCI format field jointly indicate that the second-stage SCI format includes the fourth format and a fifth format.

In an implementation, the fourth information field is an additional format field.

In an implementation, the fourth format includes the SL PRS transmission information, the COT sharing information, and the information in the second format. The fifth format includes the SL PRS transmission information, the COT sharing information, and the information in the third format.

In an implementation, the first-stage SCI includes a fifth information field. The fifth information field and the second-stage SCI format field in the first-stage SCI jointly indicate that the second-stage SCI format includes the fourth format, the fifth format, and a sixth format.

In an implementation, the fifth information field is an additional format field.

In an implementation, an embedded-SCI-format field in the sixth format is used for indicating the fourth format or the fifth format. The fourth format includes the COT sharing information and the information in the second format, and the fifth format includes the COT sharing information and the information in the third format.

In an implementation, the sixth format further includes the SL PRS transmission information.

In an implementation, the first format includes a SCI format 2-D.

In an implementation, the second format includes a SCI format 2-A, and the second format includes a SCI format 2-B.

In an implementation, the fourth format includes a SCI format 2-E.

In an implementation, the fifth format includes a SCI format 2-F.

In an implementation, the sixth format includes a SCI format 2-G.

In an implementation, the first-stage SCI format includes a SCI format 1-A.

In an implementation, the second-stage SCI format includes at least one of the following information:

an embedded SCI format; and
an embedded SCI payload.

In an implementation, the SL PRS transmission information includes at least one of the following:

an SL PRS resource identifier; and
an SL PRS request.

In an implementation, the COT sharing information includes at least one of the following:

a CAPC;
a unicast/multicast/broadcast indication;
COT sharing identification information; and
remaining COT duration.

The second terminal 1200 of the embodiment of the disclosure can implement the corresponding functions of the second terminal in the foregoing method embodiments. For the processes, functions, implementation manners, and beneficial effects corresponding to each module (sub-module, unit, or component, etc.) in the second terminal 1200, reference can be made to the corresponding descriptions in the above method embodiments, and details are not repeated herein. It should be noted that the functions described for each module (sub-module, unit, or component, etc.) in the second terminal 1200 of the embodiment of the disclosure can be implemented by different modules (sub-modules, units, or components, etc.) or by the same module (sub-module, unit, or component, etc.).

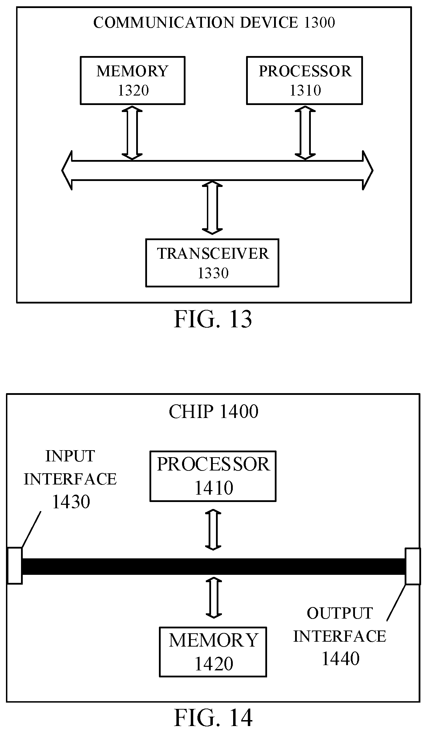

FIG. 13 is a schematic block diagram of a communication device 1300 according to an embodiment of the disclosure. The communication device 1300 includes a processor 1310, and the processor 1310 can invoke and execute computer programs from a memory to cause the communication device 1300 to implement the method in the embodiments of the disclosure.

In an implementation, the communication device 1300 may further include a memory 1320. The processor 1310 can invoke and execute the computer program from the memory 1320 to cause the communication device 1300 to implement the method in the embodiments of the disclosure. The memory 1320 may be an independent component separate from the processor 1310, or may be integrated into the processor 1310.

In an implementation, the communication device 1300 may further include a transceiver 1330, and the processor 1310 can control the transceiver 1330 to communicate with other devices. Specifically, the communication device 1300 can transmit information or data to other device, or receive information or data transmitted by other devices. The transceiver 1330 may include a transmitter and a receiver. The transceiver 1330 may further include antennas, and the number of antennas may be one or more.

In an implementation, the communication device 1300 may be the first terminal in the embodiments of the disclosure, and the communication device 1300 can implement the corresponding processes performed by the first terminal in each method of the embodiments of the disclosure, which will not be repeated herein for the sake of brevity.

In an implementation, the communication device 1300 may be the second terminal in the embodiments of the disclosure, and the communication device 1300 can implement the corresponding processes performed by the second terminal in each method of the embodiments of the disclosure, which will not be repeated herein for the sake of brevity.

FIG. 14 is a schematic structural diagram of a chip 1400 according to embodiments of the disclosure. The chip 1400 includes a processor 1410, and the processor 1410 can invoke and execute computer programs from a memory to implement the method in the embodiments of the disclosure.

In an implementation, the chip 1400 may further include a memory 1420. The processor 1410 can invoke and execute the computer programs from the memory 1420 to implement the method performed by a first terminal or a second terminal in the embodiments of the disclosure. The memory 1420 may be an independent component separate from the processor 1410, or may be integrated into the processor 1410.

In an implementation, the chip 1400 may further include an input interface 1430. The processor 1410 can control the interface 1430 to communicate with other devices or chips. Specifically, the input interface 1430 can obtain information or data transmitted by other devices or chips.

In an implementation, the chip 1400 may further include an output interface 1440. The processor 1410 can control the interface 1440 to communicate with other devices or chips. Specifically, the output interface 1440 can output information or data to other devices or chips.

In an implementation, the chip can be applied to the first terminal in the embodiments of the disclosure, and the chip can implement the corresponding processes performed by the first terminal in each method of the embodiments of the disclosure, which will not be repeated herein for the sake of brevity.

In an implementation, the chip can be applied to the second terminal in the embodiments of the disclosure, and the chip can implement the corresponding processes performed by the second terminal in each method of the embodiments of the disclosure, which will not be repeated herein for the sake of brevity.

The chips applied to the first terminal and the second terminal can be the same chip or different chips.

It should be understood that the chip in embodiments of the disclosure may also be referred to as a system-on-chip (SOC).

The processor described above may be a general-purpose processor, a digital signal processor (DSP), a field programmable gate array (FPGA), an application specific integrated circuit (ASIC), or other programmable logic devices, transistor logic devices or discrete hardware components, etc. The general purpose processor mentioned above may be a microprocessor, or the processor may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory can be a random access memory (RAM).

It should be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct Rambus RAM (DR RAM), etc. In other words, the memory in embodiments of the disclosure is intended to include, but is not limited to, these and any other suitable types of memory.

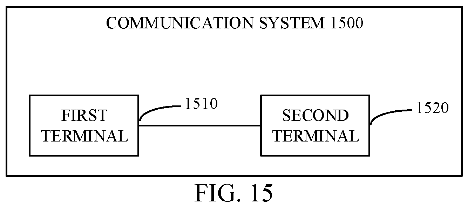

FIG. 15 illustrates a schematic block diagram of a communication system 1500 according to an embodiment of the disclosure. The communication system 1500 includes a first terminal 1510 and a second terminal 1520.

The first terminal 1510 is configured to transmit first control information, and the first control information includes SL PRS transmission information and/or COT sharing information.

The second terminal 1520 is configured to receive first control information, and the first control information includes the SL PRS transmission information and/or the COT sharing information.

The first terminal 1510 can be configured to implement corresponding functions implemented by the first terminal in the foregoing methods, and the second terminal 1520 is configured to implement corresponding functions implemented by the second terminal in the foregoing methods, which will not be repeated herein for the sake of brevity.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It should also be understood that, in various method embodiments of the disclosure, the magnitude of a sequence number of each of the foregoing processes does not mean an execution order, and an execution order of each process should be determined according to a function and an internal logic of the process, which shall not constitute any limitation to an implementation process of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

**Claims**

1. A sidelink communication method, comprising:
   transmitting, by a first terminal, first control information, wherein the first control information comprises sidelink positioning reference signal (SL PRS) transmission information and/or channel occupancy time (COT) sharing information.

2. The method of claim 1, wherein the first control information is second-stage sidelink control information (SCI), and whether the second-stage SCI comprises the SL PRS transmission information and/or the COT sharing information is indicated by first-stage SCI.

3. The method of claim 2, wherein the first-stage SCI comprises a first information field, and the first information field is used for indicating whether the second-stage SCI scheduled by the first-stage SCI comprises the COT sharing information.

4. The method of claim 3, wherein the first information field is a COT-sharing-information indication field.

5. The method of claim 3, wherein the COT-sharing-information indication field and a second-stage SCI format field in the first-stage SCI jointly indicate that a second-stage SCI format is a first format comprising the SL PRS transmission information and whether the first format comprises the COT sharing information.

6. The method of claim 5, wherein the COT-sharing-information indication field and the second-stage SCI format field jointly indicate whether the first format comprises a COT-sharing-information field.

7. The method of claim 5, wherein the COT-sharing-information indication field and the second-stage SCI format field jointly indicate whether a second format or a third format in an embedded-SCI-format field in the first format comprises the COT sharing information.

8. The method of claim 2, wherein the first-stage SCI comprises a second information field, and the second information field is used for indicating that in an unlicensed spectrum scenario, a second-stage SCI format is a fourth format, wherein the fourth format comprises the SL PRS transmission information and the COT sharing information, and the fourth format further comprises information in a second format or a third format.

9. The method of claim 8, wherein the second information field is used for indicating that in a licensed spectrum scenario, the second-stage SCI format scheduled by the first-stage SCI is a first format, and the first format comprises the SL PRS transmission information.

10. The method of claim 8 or 9, wherein the unlicensed spectrum scenario comprises that for first SCI in a SCI format 1-A transmitted in a resource pool, a current operation is accompanied by shared spectrum channel access, or a current sidelink bandwidth part (BWP) is configured with a parameter indicating a structure for physical sidelink control channel (PSCCH) and physical sidelink shared channel (PSSCH).

11. The method of claim 2, wherein the first-stage SCI comprises a third information field, wherein the third information field and a second-stage SCI format field in the first-stage SCI jointly indicate that a second-stage SCI format is a fourth format, and the fourth format comprises the SL PRS transmission information and the COT sharing information.

12. The method of claim 11, wherein the third information field is an additional format field.

13. The method of claim 2, wherein the first-stage SCI comprises a fourth information field, and the fourth information field and a second-stage SCI format field jointly indicate that a second-stage SCI format comprises a fourth format and a fifth format.

14. The method of claim 13, wherein the fourth information field is an additional format field.

15. The method of claim 13 or 14, wherein the fourth format comprises the SL PRS transmission information, the COT sharing information, and information in a second format, and the fifth format comprises the SL PRS transmission information, the COT sharing information, and information in a third format.

16. The method of claim 2, wherein the first-stage SCI comprises a fifth information field, and the fifth information field and a second-stage SCI format field in the first-stage SCI jointly indicate that a second-stage SCI format comprises a fourth format, a fifth format, and a sixth format.

17. The method of claim 16, wherein the fifth information field is an additional format field.

18. The method of claim 17, wherein an embedded-SCI-format field in the sixth format is used for indicating the fourth format or the fifth format, wherein the fourth format comprises the COT sharing information and information in a second format, and the fifth format comprises the COT sharing information and information in a third format.

19. The method of claim 18, wherein the sixth format further comprises the SL PRS transmission information.

20. The method of claim 5, 6, 7, or 9, wherein the first format comprises a SCI format 2-D.

21. The method of claim 7, 8, 15, or 19, wherein the second format comprises a SCI format 2-A, and the second format comprises a SCI format 2-B.

22. The method of any one of claims 8 to 19, wherein the fourth format comprises a SCI format 2-E.

23. The method of any one of claims 13 to 19, wherein the fifth format comprises a SCI format 2-F.

24. The method of any one of claims 16 to 19, wherein the sixth format comprises a SCI format 2-G.

25. The method of any one of claims 1 to 24, wherein a first-stage SCI format comprises a SCI format 1-A.

26. The method of any one of claims 5 to 25, wherein the second-stage SCI format comprises at least one of the following information:

    an embedded SCI format; and
    an embedded SCI payload.

27. The method of any one of claims 1 to 26, wherein the SL PRS transmission information comprises at least one of the following:

    an SL PRS resource identifier; and
    an SL PRS request.

28. The method of any one of claims 1 to 27, wherein the COT sharing information comprises at least one of the following:

    a channel access priority class;
    a unicast, multicast, or broadcast indication;
    COT sharing identification information; and
    remaining COT duration.

29. A sidelink communication method, comprising:
    receiving, by a second terminal, first control information, wherein the first control information comprises sidelink positioning reference signal (SL PRS) transmission information and/or channel occupancy time (COT) sharing information.

30. The method of claim 29, wherein the first control information is second-stage sidelink control information (SCI), and whether the second-stage SCI comprises the SL PRS transmission information and/or the COT sharing information is indicated by first-stage SCI.

31. The method of claim 30, wherein the first-stage SCI comprises a first information field, and the first information field is used for indicating whether the second-stage SCI scheduled by the first-stage SCI comprises the COT sharing information.

32. The method of claim 31, wherein the first information field is a COT-sharing-information indication field.

33. The method of claim 31, wherein the COT-sharing-information indication field and a second-stage SCI format field in the first-stage SCI jointly indicate that a second-stage SCI format is a first format comprising the SL PRS transmission information and whether the first format comprises the COT sharing information.

34. The method of claim 33, wherein the COT-sharing-information indication field and the second-stage SCI format field jointly indicate whether the first format comprises a COT-sharing-information field.

35. The method of claim 33, wherein the COT-sharing-information indication field and the second-stage SCI format field jointly indicate whether a second format or a third format in an embedded-SCI-format field in the first format comprises the COT sharing information.

36. The method of claim 30, wherein the first-stage SCI comprises a second information field, and the second information field is used for indicating that in an unlicensed spectrum scenario, a second-stage SCI format is a fourth format, wherein the fourth format comprises the SL PRS transmission information and the COT sharing information, and the fourth format further comprises information in a second format or a third format.

37. The method of claim 36, wherein the second information field is used for indicating that in a licensed spectrum scenario, the second-stage SCI format scheduled by the first-stage SCI is a first format, and the first format comprises the SL PRS transmission information.

38. The method of claim 36 or 37, wherein the unlicensed spectrum scenario comprises that for a first SCI in a SCI format 1-A transmitted in a resource pool, a current operation is accompanied by shared spectrum channel access, or a current sidelink bandwidth part (BWP) is configured with a parameter indicating a structure for physical sidelink control channel (PSCCH) and physical sidelink shared channel (PSSCH).

39. The method of claim 30, wherein the first-stage SCI comprises a third information field, and the third information field and a second-stage SCI format field in the first-stage SCI jointly indicate that a second-stage SCI format is a fourth format and the fourth format comprises the SL PRS transmission information and the COT sharing information.

40. The method of claim 39, wherein the third information field is an additional format field.

41. The method of claim 30, wherein the first-stage SCI comprises a fourth information field, and the fourth information field and a second-stage SCI format field jointly indicate that a second-stage SCI format comprises a fourth format and a fifth format.

42. The method of claim 41, wherein the fourth information field is an additional format field.

43. The method of claim 41 or 42, wherein the fourth format comprises the SL PRS transmission information, the COT sharing information, and information in a second format, and the fifth format comprises the SL PRS transmission information, the COT sharing information, and information in a third format.

44. The method of claim 30, wherein the first-stage SCI comprises a fifth information field, and the fifth information field and a second-stage SCI format field in the first-stage SCI jointly indicate that a second-stage SCI format comprises a fourth format, a fifth format, and a sixth format.

45. The method of claim 44, wherein the fifth information field is an additional format field.

46. The method of claim 45, wherein an embedded-SCI-format field in the sixth format is used for indicating the fourth format or the fifth format, wherein the fourth format comprises the COT sharing information and information in a second format, and the fifth format comprises the COT sharing information and information in a third format.

47. The method of claim 46, wherein the sixth format further comprises the SL PRS transmission information.

48. The method of claim 33, 34, 35, or 37, wherein the first format comprises a SCI format 2-D.

49. The method of claim 35, 36, 43, or 47, wherein the second format comprises a SCI format 2-A, and the second format comprises a SCI format 2-B.

50. The method of any one of claims 36 to 47, wherein the fourth format comprises a SCI format 2-E.

51. The method of any one of claims 41 to 47, wherein the fifth format comprises a SCI format 2-F.

52. The method of any one of claims 44 to 47, wherein the sixth format comprises a SCI format 2-G.

53. The method of any one of claims 29 to 52, wherein a first-stage SCI format comprises a SCI format 1-A.

54. The method of any one of claims 33 to 53, wherein the second-stage SCI format comprises at least one of the following information:

> an embedded SCI format; and
> an embedded SCI payload.

55. The method of any one of claims 29 to 54, wherein the SL PRS transmission information comprises at least one of the following:

> an SL PRS resource identifier; and
> an SL PRS request.

56. The method of any one of claims 29 to 55, wherein the COT sharing information comprises at least one of the following:

> a channel access priority class;
> a unicast, multicast, or broadcast indication;
> COT sharing identification information; and
> remaining COT duration.

57. A first terminal, comprising:
a transmitting unit configured to transmit first control information, wherein the first control information comprises sidelink positioning reference signal (SL PRS) transmission information and/or channel occupancy time (COT) sharing information.

58. A second terminal, comprising:
a receiving unit configured to receive first control information, wherein the first control information comprises sidelink positioning reference signal (SL PRS) transmission information and/or channel occupancy time (COT) sharing information.

59. A terminal device, comprising:

> a memory configured to store a computer program;
> a transceiver configured to communicate with other devices; and
> a processor configured to invoke and execute the computer program stored in the memory, to cause the terminal device to perform the method of any one of claims 1 to 56.

60. A chip, comprising:
a processor configured to invoke and execute a computer program from a memory, to cause a device installed with the chip to perform the method of any one of claims 1 to 56.

**61.** A computer-readable storage medium configured to store a computer program which, when executed by a device, causes the device to perform the method of any one of claims 1 to 56.

**62.** A computer program product, comprising computer program instructions which cause a computer to perform the method of any one of claims 1 to 56.

**63.** A computer program that causes a computer to perform the method of any one of claims 1 to 56.

**64.** A communication system, comprising:

a first terminal configured to perform the method of any one of claims 1 to 28; and
a second terminal configured to perform the method of any one of claims 29 to 56.

FIG. 1

EP 4 788 023 A1

FIG. 2

FIG. 3

| RE#0 | RE#1 | RE#2 | RE#3 | RE#4 | RE#5 | RE#6 | RE#7 | RE#8 | RE#9 | RE#10 | RE#11 |
|------|------|------|------|------|------|------|------|------|------|-------|-------|

PORT 0/POTR 1 ... PORT 0/POTR 1 ... PORT 0/POTR 1 ... PORT 0/POTR 1 ... PORT 0/POTR 1 ... PORT 0/POTR 1

FIG. 4

PSCCH FREQUENCY-DOMAIN RESOURCE INDICATION

SIZE OF SUBCHANNEL

NUMBER OF SUBCHANNELS=3

START RB INDEX OF SUBCHANNEL

FIG. 5

SLOT 0 ← → SLOT 1

▨ DOWNLINK SYMBOL   ☐ FLEXIBLE SYMBOL   ▤ UPLINK SYMBOL

FIG. 6

$f$(RB)

▨ IRB 0      ▤ IRB 1

FIG. 7

60MHz CARRIER BANDWITH

| 20MHz | 20MHz | 20MHz |
|---|---|---|
| RB SET#0 | GUARD BAND | RB SET#2 | GUARD BAND | RB SET#3 |

FIG. 8

S910

900

FIRST TERMINAL TRANSMITS FIRST CONTROL INFORMATION, WHERE THE FIRST CONTROL INFORMATION INCLUDES SL PRS TRANSMISSION INFORMATION AND/OR COT SHARING INFORMATION

FIG. 9

S1010

1000

SECOND TERMINAL RECEIVES FIRST CONTROL INFORMATION, WHERE THE FIRST CONTROL INFORMATION INCLUDES SL PRS TRANSMISSION INFORMATION AND/OR COT SHARING INFORMATION

FIG. 10

FIRST TERMINAL 1100

TRANSMITTING UNIT 1101

FIG. 11

SECOND TERMINAL 1200

RECEIVING UNIT 1201

FIG. 12

COMMUNICATION DEVICE 1300

MEMORY
1320

PROCESSOR
1310

TRANSCEIVER
1330

FIG. 13

CHIP 1400

INPUT
INTERFACE
1430

PROCESSOR
1410

MEMORY
1420

OUTPUT
INTERFACE
1440

FIG. 14

FIG. 15

## INTERNATIONAL SEARCH REPORT

International application No.

**PCT/CN2023/121112**

### A. CLASSIFICATION OF SUBJECT MATTER

H04W 72/25(2023.01)i

According to International Patent Classification (IPC) or to both national classification and IPC

### B. FIELDS SEARCHED

Minimum documentation searched (classification system followed by classification symbols)

IPC: H04W H04B H04L

Documentation searched other than minimum documentation to the extent that such documents are included in the fields searched

Electronic data base consulted during the international search (name of data base and, where practicable, search terms used)

CNTXT; CNKI; VEN; ENTXTC; 3GPP: 侧行, 侧链, 直连, 直通, SL, 定位参考信号, 信道占用时间共享, 侧行控制信息, sidelink, positioning reference signal, PRS, channel occupancy time, shar+, sidelink control information

### C. DOCUMENTS CONSIDERED TO BE RELEVANT

| Category* | Citation of document, with indication, where appropriate, of the relevant passages | Relevant to claim No. |
|---|---|---|
| X | WO 2023130433 A1 (LENOVO BEIJING LTD.) 13 July 2023 (2023-07-13) description, paragraphs 182-197 and 227-236 | 1, 27-29, 55-64 |
| X | CN 115002787 A (HEFEI YIRUI COMMUNICATION TECHNOLOGY CO., LTD. et al.) 02 September 2022 (2022-09-02) description, paragraphs 122-186 | 1, 27-29, 55-64 |
| X | CN 115706627 A (CITIC KEZHILIAN TECHNOLOGY CO., LTD.) 17 February 2023 (2023-02-17) description, paragraphs 285-394 | 1, 27-29, 55-64 |
| A | US 2022279581 A1 (LG ELECTRONICS INC.) 01 September 2022 (2022-09-01) entire document | 1-64 |
| A | WO 2023165468 A1 (HUAWEI TECHNOLOGIES CO., LTD.) 07 September 2023 (2023-09-07) entire document | 1-64 |
| A | Huawei et al. "R1-2302379, Discussion on SL-PRS Resource Allocation" *3GPP TSG-RAN WG1 Meeting #112bis-e,* 08 April 2023 (2023-04-08), entire document | 1-64 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 April 2024** | **23 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121112**

| Patent document cited in search report | | | Publication date (day/month/year) | Patent family member(s) | | | Publication date (day/month/year) |
|---|---|---|---|---|---|---|---|
| WO | 2023130433 | A1 | 13 July 2023 | None | | | |
| CN | 115002787 | A | 02 September 2022 | None | | | |
| CN | 115706627 | A | 17 February 2023 | None | | | |
| US | 2022279581 | A1 | 01 September 2022 | US | 11903026 | B2 | 13 February 2024 |
| | | | | WO | 2021040501 | A1 | 04 March 2021 |
| WO | 2023165468 | A1 | 07 September 2023 | WO | 2023165468 | A9 | 05 October 2023 |

Form PCT/ISA/210 (patent family annex) (July 2022)